# EUROPÄISCHE PATENTSCHRIFT

(11) **EP 4 116 173 B1**
(45) Veröffentlichungstag und Bekanntmachung des Hinweises auf die Patenterteilung: **26.08.2026**
(21) Anmeldenummer: 22173663.0
(22) Anmeldetag: 17.05.2022
(51) Int. Cl.: B62D 15/02, B60W 30/06

(54) **VERFAHREN ZUM UNTERSTÜTZEN EINES EINPARKENS EINES KRAFTFAHRZEUGS**
METHOD FOR PROVIDING SUPPORT WHEN PARKING A MOTOR VEHICLE
PROCÉDÉ D'AIDE AU STATIONNEMENT D'UN VÉHICULE AUTOMOBILE

(30) Priorität: 31.05.2021 DE 102021205530
(43) Veröffentlichungstag der Anmeldung: 11.01.2023
(73) Patentinhaber: VOLKSWAGEN AG, 38440 Wolfsburg (DE)
(72) Erfinder: Göricke, Bastian, 38446 Wolfsburg (DE); Seeland, Jana, 38448 Wolfsburg (DE); Radimirsch, Dr. Markus, 31311 Uetze (DE)

(56) Entgegenhaltungen:
- CN-A- 111 746 503
- CN-A- 112 644 478
- DE-A1- 102006 052 575
- DE-A1- 102009 006 335
- DE-A1- 102009 046 674
- DE-A1- 102010 008 545
- DE-A1- 102012 221 036
- DE-A1- 102014 018 189
- DE-A1- 102016 008 628
- DE-A1- 102017 125 107
- DE-A1- 102018 214 466
- US-A1- 2018 156 632

## Beschreibung

Die Erfindung betrifft ein Verfahren zum Unterstützen eines Einparkens eines Kraftfahrzeugs. Ferner betrifft die Erfindung ein Kraftfahrzeug zum Durchführen eines derartigen Verfahrens. Ein Kraftfahrzeug weist oftmals ein Fahrerassistenzsystem auf, das dazu ausgebildet ist, einen Fahrer des Kraftfahrzeugs bei einem Einparken des Kraftfahrzeugs zumindest zu unterstützen. Ein derartiges Fahrerassistenzsystem kann beispielsweise als eine Einparkhilfe oder als ein intelligenter Einparkhilfeassistent ausgebildet sein. Ein derartiges Fahrerassistenzsystem muss jedoch in der Regel manuell von einem Benutzer des Kraftfahrzeugs aktiviert werden. Es ist daher oftmals im Kraftfahrzeug ein Bedienelement vorgesehen, bei dessen Bedienung durch den Benutzer, das heißt typischerweise durch einen Fahrer des Kraftfahrzeugs, es zur Aktivierung des entsprechenden, beim Einparken unterstützenden Fahrerassistenzsystems kommt.

Die DE 10 2013 216 455 A1 zeigt eine Einparkhilfe für ein Fahrzeug, bei der eine Einparkabsicht auf Basis von Fahrzeugzustandsinformationen und Umgebungsinformationen bestimmt wird. Ferner wird eine Richtung des Fahrzeugs und eine Schalthebelposition von einem Schalthebel im Fahrzeug analysiert, um einen Einparkmodus des Fahrzeugs einzustellen. Auf Basis des eingestellten Einparkmodus wird daraufhin ein automatisches Einparken unterstützt.

Die DE 10 2012 221 036 A1 zeigt ein Verfahren zum automatischen Einschalten eines Parkassistenzsystems in einem Kraftfahrzeug gemäß dem Oberbegriff des Anspruchs 1. Hierbei wird ein Blickverhalten des Fahrers ermittelt, um in Abhängigkeit vom ermittelten Blickverhalten eine Wahrscheinlichkeit für ein Vorliegen einer Parkintention zu bestimmen und bei einer ausreichend hohen Wahrscheinlichkeit das Parkassistenzsystem automatisch einzuschalten.

Die DE 10 2017 125 107 A1 zeigt ein Verfahren zum Unterstützen eines Fahrers eines Kraftfahrzeugs bei einem manuellen Parkvorgang in einer Umgebung des Kraftfahrzeugs. Zumindest ein den Parkvorgang charakterisierender Indikator wird erfasst und abhängig von einem Auswerten des Indikators ein Durchführen eines Parkvorgangs erkannt. Abhängig davon wird zumindest eine parkvorgangsspezifische Funktion des Kraftfahrzeugs zum Unterstützen des Fahrers beim Parkvorgang aktiviert.

Die DE 10 2009 046 674 A1 zeigt ein Verfahren zur Unterstützung eines Parkvorgangs eines Kraftfahrzeug. Das Verfahren umfasst ein Anfahren eines Bereiches vor einer Stellposition, Erfassung des Bereiches, Einleiten einer Fahreraktion, Erkennung der Anordnung der Stellposition relativ zum Kraftfahrzeug, instantane Erfassung der Konturen der Stellposition und Führung des Kraftfahrzeugs auf die Stellposition.

Es ist die Aufgabe der Erfindung eine Lösung bereitzustellen, mittels derer zuverlässig eine Einparkabsicht eines Fahrers eines Kraftfahrzeugs erkannt werden kann.

Diese Aufgabe wird durch die Gegenstände der unabhängigen Patentansprüche gelöst. Ein Aspekt der Erfindung betrifft das erfindungsgemäße Verfahren, das dafür ausgebildet ist, bei einem Einparken eines Kraftfahrzeugs zu unterstützen. Bei dem Verfahren handelt es sich somit um ein Einparkunterstützungsverfahren für ein Kraftfahrzeug.

Der Erfindung liegt die Erkenntnis zugrunde, dass zahlreiche in einem Kraftfahrzeug erfassbare Eingangsgrößen als Indizien für eine Einparkabsicht des Fahrers eines Kraftfahrzeugs herangezogen werden können. Die tatsächliche Einparkabsicht des Fahrers kann jedoch oftmals nur unter Berücksichtigung einer aktuellen Situation, in der die Eingangsgrößen erfasst wurden, sowie bevorzugt aus einem Zusammenspiel mehrerer unterschiedlicher Eingangsgrößen zuverlässig bestimmt werden. Unter den zahlreichen Eingangsgrößen ist eine Lenkeingabe des Fahrers des Kraftfahrzeugs besonders aussagekräftig, da anhand dieser ein für eine Einparkabsicht charakteristisches Fahrmanöver identifiziert werden kann. Aus diesem Grund sollte dem Verfahren zum Unterstützen des Einparkens des Kraftfahrzeugs zumindest eine Information zugrunde gelegt werden, die eine der Eingangsgrößen beschreibt und im Folgenden als Einparkanzeicheninformation bezeichnet wird, und ausgehend von dieser ein Einparkabsichtswahrscheinlichkeitswert für die aktuelle Situation bestimmt und ermittelt werden.

Das erfindungsgemäße Verfahren umfasst folgende Schritte: Es erfolgt ein Bereitstellen von zumindest einer Parkbereichsinformation, die einen unbelegten Parkbereich in einer Umgebung des Kraftfahrzeugs beschreibt. Als Parkbereich ist hier eine Fläche einer vorgegebenen Größe zu verstehen, wobei die Fläche so dimensioniert ist, dass auf der Fläche, also dem Parkbereich, ein Kraftfahrzeug abgestellt werden kann. Insbesondere ist die Fläche derart dimensioniert, dass auch ein Gespann aus einem Kraftfahrzeug und einem Anhänger und/oder ein Bus auf dem Parkbereich abgestellt und somit dort beispielsweise geparkt werden kann. Bei dem unbelegten Parkbereich handelt es sich bevorzugt um einen zu einem aktuellen Zeitpunkt freien Parkplatz, einen zum aktuellen Zeitpunkt freien Stellplatz, eine zum aktuellen Zeitpunkt freie Parklücke und/oder eine zum aktuellen Zeitpunkt freie Parkbucht. Der unbelegte Parkbereich kann hierbei einer öffentlichen oder privaten Verkehrsfläche zugeordnet sein.

Die Parkbereichsinformation umfasst bevorzugt eine Positionsangabe des unbelegten Parkbereichs, beispielsweise in Form von Koordinaten, die den Parkbereich beschreiben. Die Umgebung des Kraftfahrzeugs ist ein Bereich um das Kraftfahrzeug herum, wobei sich der Bereich mit einem vorgegebenen Radius um das Kraftfahrzeugs herum erstreckt. Bevorzugt entspricht die Umgebung des Kraftfahrzeugs zumindest einem Erfassungsbereich einer Umgebungserfassungseinrichtung des Kraftfahrzeugs. Vorzugsweise wird der unbelegte Parkbereich in der Umgebung mittels der Umgebungserfassungseinrichtung des Kraftfahrzeugs erfasst. Die Umgebungserfassungseinrichtung ist beispielsweise als Kamera, Radarsensor, Lidar (Light detection and ranging)-Gerät und/oder Infrarotsensor ausgebildet. Durch das Bereitstellen der zumindest einen Parkbereichsinformation liegen dem Kraftfahrzeug Daten vor, die zumindest eine freie Fläche, in die das Kraftfahrzeug prinzipiell einparken könnte, beschreiben.

Ein weiterer Verfahrensschritt sieht ein Erfassen von zumindest einer Einparkanzeicheninformation vor. Die Einparkanzeicheninformation beschreibt ein Anzeichen für ein Einparken des Kraftfahrzeugs in den unbelegten Parkbereich. Die Einparkanzeicheninformation ist also ein Indiz dafür, dass das Kraftfahrzeug in den unbelegten Parkbereich einparken soll. Zu einem aktuellen Zeitpunkt befindet sich das Kraftfahrzeug somit noch nicht auf dem unbelegten Parkbereich, sondern beispielsweise auf einem an den unbelegten Parkbereich angrenzenden Fahruntergrund, wie beispielsweise eine an den Parkbereich angrenzende Straße, von dem aus womöglich das Einparken in den unbelegten Parkbereich vorgesehen ist. Die zumindest eine Einparkanzeicheninformation weist zumindest eine Lenkeingabeninformation auf, die eine Lenkeingabe des Fahrers des Kraftfahrzeugs beschreibt. Unter einer Lenkeingabe des Fahrers werden dessen Eingriffe auf eine Querführung des Kraftfahrzeugs verstanden. Diese Lenkeingabe kann beispielsweise mittels einer Sensoreinrichtung des Kraftfahrzeugs, beispielsweise einem Positionssensor zum Bestimmen eines Lenkwinkels einer Lenkung des Kraftfahrzeugs, erfasst werden. In einem Beispiel, kann die Lenkeingabeinformation beispielsweise eine Lenkeingabe des Fahrers über eine Zeitdauer beschreiben, sodass eine Fahrtrajektorie des Kraftfahrzeugs erfasst und bereitgestellt wird. Ist dies der Fall, kann beispielsweise von einer Form der Fahrtrajektorie auf ein geplantes Einparken des Kraftfahrzeugs in den unbelegten Parkbereich geschlossen werden, da beispielsweise die Trajektorie und somit die vorliegende Lenkeingabeinformation charakteristisch für einen Einparkvorgang ist. Diesem Vorgehen liegt die Erkenntnis zugrunde, dass es zumindest ein typisches Anfahrverhalten gibt, das mit zumindest einer charakteristischen Fahrtrajektorie beschrieben werden kann, wobei zumindest eine Teilmenge von Fahrern das zumindest eine typische Anfahrverhalten zeigen, wenn sie in den unbelegten Parkbereich einparken.

Es ist möglich, dass zuerst die Parkbereichsinformation bereitgestellt wird und anschließend die zumindest eine Einparkanzeicheninformation erfasst wird. Alternativ dazu ist es möglich, dass zunächst die zumindest eine Einparkanzeicheninformation erfasst wird und anschließend die zumindest eine Parkbereichsinformation bereitgestellt wird. Letzteres ist beispielsweise immer dann der Fall, wenn der unbelegte Parkbereich außerhalb eines Erfassungsbereich, das heißt beispielweise einer Reichweite, der Umgebungserfassungseinrichtung des Kraftfahrzeugs liegt, sodass beispielsweise zunächst die Einparkanzeicheninformation erfasst wird, beispielsweise indem erkannt wird, dass die Fahrtrajektorie der zumindest einen charakteristischen Fahrtrajektorie entspricht, und erst danach der unbelegte Parkbereich erfasst und somit in Form der Parkbereichsinformation bereitgestellt wird.

In einem weiteren Verfahrensschritt erfolgt ein Ermitteln eines Einparkabsichtswahrscheinlichkeitswerts, der eine Wahrscheinlichkeit einer Einparkabsicht des Fahrers des Kraftfahrzeugs in den unbelegten Parkbereich beschreibt. Der Einparkabsichtswahrscheinlichkeitswert wird unter Anwendung eines situationsabhängigen Gewichtungskriteriums auf die zumindest eine Einparkanzeicheninformation unter Berücksichtigung der zumindest einen erfassten Parkbereichsinformation ermittelt. Das situationsabhängige Gewichtungskriterium enthält zumindest eine Vorschrift, anhand derer die zumindest eine Einparkanzeicheninformation derart gewichtet werden kann, dass letztendlich die Wahrscheinlichkeit der Einparkabsicht des Fahrers des Kraftfahrzeugs beziffert werden kann. Der Einparkabsichtswahrscheinlichkeitswert liegt beispielsweise zwischen 0 und 1, wobei 0 auf eine fehlende und somit nicht erkannte Wahrscheinlichkeit der Einparkabsicht hindeutet und ein Einparkabsichtswahrscheinlichkeitswert von 1 beispielsweise eine unzweifelhaft erkannte Einparkabsicht des Kraftfahrzeugs beschreiben kann.

Da das Gewichtungskriterium situationsabhängig ist, kann beispielsweise, wenn sich das Kraftfahrzeug auf einer vielbefahrenen Straße befindet, eine andere Anforderung an die Gewichtung von einzelnen Einparkanzeicheninformationen gestellt werden im Vergleich zu einer Situation, in der sich das Kraftfahrzeug beispielsweise auf einer einspurigen und wenig befahrenen Straße in einem Wohngebiet befindet. Diesem Vorgehen liegt die Erkenntnis zugrunde, dass sich typischerweise ein Fahrer mit einem Einparkwunsch auf einer vielbefahrenen Straße anders verhält, als er dies beispielsweise im Vergleich dazu verkehrsberuhigteren Wohngebiet tun würde. Gründe hierfür können sein, dass auf der vielbefahrenen Straße beispielsweise weniger Platz für ein Ausholen und/oder Rangieren und/oder subjektiv weniger Zeit für den Einparkvorgang zur Verfügung stehen und somit der Fahrer beispielsweise eine andere Fahrtrajektorie zum Einparken anfahren würde, die typischerweise nicht der zumindest einen charakteristischen Fahrtrajektorie entspricht. Beispielsweise würde er im Falle eines Längseinparkens beispielsweise eher vorwärts einparken, so lange er sich auf der vielbefahrenen Straße befindet und beispielsweise darauf verzichten, rückwärts mehrzügig in eine beispielsweise senkrecht zu einem Straßenverlauf der Straße angeordnete Parklücke als unbelegten Parkbereich einzufahren. Dem gegenüber kann es beispielsweise in einem im Vergleich dazu verkehrsberuhigteren Wohngebiet durchaus der Fall sein, dass der Fahrer quer rückwärts einparkt. Bereits diese beiden unterschiedlichen Einparkrichtungen lassen unterschiedliche Lenkeingaben des Fahrers und somit zum Beispiel unterschiedliche und gegebenenfalls charakteristische Fahrtrajektorien erwarten. Daher erfolgt eine Bewertung der zumindest einen Einparkanzeicheninformation situationsabhängig. Falls nur eine einzige Einparkanzeicheninformation erfasst wird, kommt es dennoch zu einer Gewichtung dieser einzigen Einparkanzeicheninformation, da der der einzigen Einparkanzeicheninformation zugeordnete Einparkabsichtswahrscheinlichkeitswert von der aktuellen Situation abhängt. Das situationsabhängige Gewichtungskriterium kann alternativ als situationsabhängiges Auswertekriterium bezeichnet werden. Denn das situationsabhängige Gewichtungskriterium ermöglicht die Auswertung der zumindest einen Einparkanzeicheninformation und bestimmt durch das Auswerten anhand der Vorschriften, die das Gewichtungskriterium aufweist, den Einparkabsichtswahrscheinlichkeitswert.

Um die Wahrscheinlichkeit der Einparkabsicht des Fahrers des Kraftfahrzeugs und somit letztendlich des Kraftfahrzeugs abschätzen zu können, wird die zumindest eine erfasste Parkbereichsinformation beim Anwenden des situationsabhängigen Gewichtungskriteriums berücksichtigt. Das bedeutet, dass die Einparkanzeicheninformation in Zusammenschau mit der Parkbereichsinformation ausgewertet, das heißt situationsabhängig gewichtet, wird. Dies bedeutet, dass es nicht ausreicht, nur anhand der zumindest einen Einparkanzeicheninformation das Anzeichen für das Einparken des Kraftfahrzeugs zu erkennen. Vielmehr sollte immer tatsächlich ein unbelegter Parkbereich, das heißt beispielsweise eine zum aktuellen Zeitpunkt freie Parklücke, erkannt worden sein oder erkannt werden, in die das Kraftfahrzeug wahrscheinlich einparken möchte, das heißt, in die der Fahrer das Kraftfahrzeug einparken möchte. Im Falle beispielsweise von der Lenkeingabeinformation als Einparkanzeicheninformation, die eine Fahrtrajektorie beschreibt, die normalerweise ausschließlich für ein Einparken abgefahren wird und die somit ein starkes Anzeichen für das Einparken ist, reicht dies dennoch nicht aus, um den Einparkabsichtswahrscheinlichkeitswert bestimmen zu können. Sondern es muss tatsächlich ein unbelegter Parkbereich in der Umgebung identifiziert worden sein, bevorzugt ein unbelegter Parkbereich, der sich auf einer anhand der erfassten Fahrtrajektorie bestimmten prognostizierten Fahrtrajektorie befindet und somit bei einer Weiterfahrt entlang der erfassten Fahrtrajektorie erreichbar ist.

Bevorzugt werden stets mehrere Einparkanzeicheninformationen miteinander in Beziehung gebracht und mithilfe einer im situationsabhängigen Gewichtungskriterium hinterlegten situationsabhängig unterschiedlichen Gewichtung, also durch Anwendung des Gewichtungskriteriums, miteinander fusioniert, um einen zuverlässigen Einparkabsichtswahrscheinlichkeitswert bestimmen zu können. Anders ausgedrückt wird bevorzugt erst bei einer ausreichenden Anzahl an unterschiedlichen Indizien, das heißt an Anzeichen für die Einparkabsicht des Kraftfahrzeugs (also letztendlich des Fahrers des Kraftfahrzeugs), der Einparkabsichtswahrscheinlichkeitswert ermittelt.

Falls der ermittelte Einparkabsichtswahrscheinlichkeitswert größer als ein Wahrscheinlichkeitsgrenzwert ist, erfolgt ein automatisches Aktivieren oder Anbieten des Aktivierens eines Fahrerassistenzsystems zum Unterstützen des Einparkens des Kraftfahrzeugs in den unbelegten Parkbereich. Nur wenn der ermittelte Einparkabsichtswahrscheinlichkeitswert tatsächlich einen Wert einnimmt, der darauf hindeutet, dass die Einparkabsicht des Kraftfahrzeugs vorliegt, wird also auf eine tatsächlich vorliegende Einparkabsicht des Fahrers des Kraftfahrzeugs geschlossen und beispielsweise ein entsprechendes Fahrerassistenzsystem, wie eine Einparkhilfe oder einen intelligenten Einparkhilfeassistent, automatisch gestartet, sodass dieses den Fahrer beim Einparken in den unbelegten Parkbereich unterstützen kann. Der Wahrscheinlichkeitsgrenzwert ist bevorzugt fest vorgegeben und im Kraftfahrzeug hinterlegt und beträgt einen Wert zwischen 0 und 1.

Alternativ ist es vorgesehen, dass zunächst beispielsweise auf einer Anzeigeeinrichtung in einem Inneren des Kraftfahrzeugs, beispielsweise auf einem Bildschirm im Kraftfahrzeug, eine Meldung visuell angezeigt wird, die eine manuelle Aktivierung von zumindest einem der Fahrerassistenzsysteme zum Unterstützen des Einparkens des Kraftfahrzeugs vorschlägt. Falls im Kraftfahrzeug mehrere Fahrerassistenzsysteme zum Unterstützen des Einparkens des Kraftfahrzeugs vorgesehen sind, kann eine Auswahl zwischen den mehreren Fahrerassistenzsystemen angeboten werden. Im Kraftfahrzeug ist ferner eine Betätigungseinrichtung vorgesehen, bei deren Betätigung die manuelle Aktivierung erfolgt. Hierfür können eine Bedienfläche auf einem berührungssensitiven Bildschirm im Kraftfahrzeug und/oder eine Taste, ein Dreh-Drückschalter und/oder ein Knopf im Kraftfahrzeug vorgesehen sein, bei deren jeweiliger Bedienung beziehungsweise Betätigung der Fahrer manuell das Fahrerassistenzsystem aktivieren kann. In diesem Fall kommt es also nicht zu einem automatischen Aktivieren des entsprechenden Fahrerassistenzsystems, sondern nur zu einem dem Fahrer angezeigten Vorschlag, der umfasst, dass das Fahrerassistenzsystem aktiviert werden könnte oder sollte. Das Anbieten des Aktivierens kann alternativ oder zusätzlich dazu akustisch mittels einer Lautsprechereinrichtung im Kraftfahrzeug ausgegeben werden. Die manuelle Aktivierung des Fahrerassistenzsystems kann mittels einer entsprechenden Spracheingabe, die mittels einer Mikrofoneinrichtung im Kraftfahrzeug erfasst wird, durchgeführt werden. Das Anbieten des Aktivierens des Fahrerassistenzsystems und/oder das daraufhin erfolgende manuelle Aktivieren kann alternativ oder zusätzlich dazu mittels eines mobilen Endgeräts, das innerhalb des Kraftfahrzeugs positioniert ist, erfolgen, wobei das mobile Endgerät hierzu mit dem Kraftfahrzeug zur Übertragung von Daten, wie zum Beispiel Aktivierungsdaten für das ausgewählte Fahrerassistenzsystem, gekoppelt ist.

Das Ermitteln des Einparkabsichtswahrscheinlichkeitswerts und/oder das Überprüfen, ob der ermittelte Einparkabsichtswahrscheinlichkeitswert größer als der Wahrscheinlichkeitsgrenzwert ist, erfolgt bevorzugt mittels einer Auswerteeinrichtung im Kraftfahrzeug. Das automatische Aktivieren des Fahrerassistenzsystems kann beispielsweise mittels einer Steuereinrichtung im Kraftfahrzeug erfolgen, wobei diese Steuereinrichtung dazu ausgebildet ist, auf eine Längs- und/oder Querführung des Kraftfahrzeugs einzuwirken und somit letztendlich zumindest ein Steuersignal des Fahrerassistenzsystems zu erzeugen und/oder umzusetzen.

Wird beispielsweise anhand der Lenkeingabe des Fahrers festgestellt, dass dieser eine ausholende Fahrbewegung im Bereich der Umgebung des unbelegten Parkbereichs durchgeführt hat, die auf ein Vorwärtseinparken in einen senkrecht zum Straßenverlauf ausgerichteten Parkbereich, das heißt eine sogenannte Querparklücke am Straßenrand, hindeutet und weist die Parkbereichsinformation beispielsweise auf, dass sich der unbelegte Parkbereich in einer Reihe von parallel zueinander angeordneten Parkbereichen befindet, die beispielsweise auf eine größere Ansammlung von einzelnen Parkbereichen hindeuten, kann der ermittelte Einparkabsichtswahrscheinlichkeitswert ausgehend von dieser einen Einparkanzeicheninformation unter Berücksichtigung der Parkbereichsinformation bereits größer als der Wahrscheinlichkeitsgrenzwert sein, sodass zum Beispiel das automatische Aktivieren des unterstützenden Fahrerassistenzsystems automatisch erfolgen kann. Als weitere Einparkanzeicheninformation können in diesem Beispiel beispielsweise eine Fahrgeschwindigkeit und/oder ein Setzen eines Blinkers des Kraftfahrzeugs, der auf einen Fahrwunsch in Richtung des unbelegten Parkbereichs hindeutet, berücksichtigt und ebenfalls entsprechend gewichtet werden. Hierbei kann beispielsweise vorgesehen sein, dass die langsamere Fahrgeschwindigkeit eher eine schwache Einparkabsicht zugeordnet bekommt, da die entsprechende Geschwindigkeit beispielsweise im Rahmen einer typischen Fahrgeschwindigkeit in der Umgebung des unbelegten Parkbereichs bekannt ist, beispielsweise wenn das Kraftfahrzeug in der Umgebung des unbelegten Parkbereichs generell einer der aktuellen Geschwindigkeit entsprechenden Geschwindigkeitsbegrenzung unterliegt. Reduziert das Kraftfahrzeug jedoch beispielsweise bei einer Fahrt auf einer Straße deutlich seine Geschwindigkeit im Vergleich zu einer typischen Fahrgeschwindigkeit auf dieser Straße, kann die beobachtete reduzierte Fahrgeschwindigkeit als stärkeres Anzeichen für eine Einparkabsicht gewichtet werden. Entsprechende Informationen und Vorschriften liegt hierbei dem situationsabhängigen Gewichtungskriterium zugrunde. Dies ist letztendlich möglich, da sowohl das Gewichtungskriterium selbst situationsabhängig ausgestaltet ist und zudem die erfasste Parkbereichsinformation berücksichtigt wird, das heißt die bekannten Informationen zum unbelegten Parkbereich werden bei der Bestimmung des Einparkabsichtswahrscheinlichkeitswerts stets berücksichtigt. Das Blinken des Kraftfahrzeugs kann beispielsweise als starkes Anzeichen für das Einparken gewertet werden, wenn sich das Kraftfahrzeug gemäß der Parkbereichsinformation auf einem Parkplatz mit mehreren Parkbereichen befindet. Demgegenüber kann es jedoch als schwächeres Anzeichen für das Einparken gewertet werden, wenn sich das Kraftfahrzeug beispielsweise in einer Nähe einer Kreuzung und/oder einer Straßenabzweigung befindet. Denn dann kann das Aktivieren des Blinkers auf einen Abbiegewunsch des Fahrers hindeuten. Es ist zudem bei einem fehlenden Aktivieren des Blinkers situationsabhängig nicht davonauszugehen, dass keine Einparkabsicht vorliegt. Denn beispielsweise bei einer Fahrt auf einer Straße mit relativ wenig Verkehrsgeschehen, wie beispielsweise einem Wohngebiet, kommt es oftmals dazu, dass es der Fahrer des Kraftfahrzeugs unterlässt zu blinken, obwohl er in einen beispielsweise seitlich zu ihm angeordneten Parkbereich einfahren möchte. Die tatsächliche Gewichtung einer bestimmten Einparkanzeicheninformation kann somit stets situationsabhängig entsprechend gewichtet werden. Dies bedeutet, dass ein und dieselbe Einparkanzeicheninformation in verschiedenen Situationen unterschiedliche Auswirkungen auf die letztendlich ermittelte Wahrscheinlichkeit der Einparkabsicht hat und somit als unterschiedlich starkes Anzeichen für das Einparken des Kraftfahrzeugs in den unbelegten Parkbereich gewertet wird.

Eine Bestimmung der Situation, in der sich das Kraftfahrzeug zum aktuellen Zeitpunkt befindet, kann von der Parkbereichsinformation umfasst und somit anhand der Parkbereichsinformation bekannt sein. Alternativ oder zusätzlich dazu kann die Situation aus Informationen ermittelt werden, die in einem Navigationssystem des Kraftfahrzeugs hinterlegte und/oder über eine Kommunikationsverbindung von einer externen Servereinrichtung und/oder einem anderen Verkehrsteilnehmer und/oder einer Infrastruktureinrichtung an das Kraftfahrzeug übermittelt werden. Hierbei kann eine Eigenposition und/oder eine aktuelle Ausrichtung des Kraftfahrzeugs, die mittels einer entsprechenden Sensoreinrichtung des Kraftfahrzeugs ermittelt wird, berücksichtigt werden. Alternativ oder zusätzlich werden im Navigationssystem gespeicherte und/oder über die Kommunikationsverbindung bereitgestellte Kartendaten der Umgebung des Kraftfahrzeugs und/oder des unbelegten Parkbereichs zum Bestimmen der Situation berücksichtigt. Bevorzugt wird das Kraftfahrzeug in einer von den Kartendaten umfassten Landkarte verortet. Alternativ oder zusätzlich dazu kann ein Auswerten von mittels der Umgebungserfassungseinrichtung des Kraftfahrzeugs erfassten Umgebungsdaten derart erfolgen, dass Informationen über ein aktuelles Verkehrsgeschehen in der Umgebung bereitgestellt werden, die beispielsweise ein Verhalten von zumindest einem anderen Fahrzeug, einem Fahrrad, einem Fußgänger und/oder einer Infrastruktureinrichtung, wie zum Beispiel einer Ampel, beschreiben. Alternativ oder zusätzlich dazu können aktuelle Wetterinformationen erfasst und/oder bereitgestellt werden. All diese Informationen können dazu beitragen, die aktuelle Situation des Kraftfahrzeugs zu definieren und beeinflussen die situationsabhängige Gewichtung der zumindest einen Einparkanzeicheninformation, die durch das Anwenden des situationsabhängigen Gewichtungskriteriums erfolgt.

Insgesamt wird erreicht, dass besonders zuverlässig die Wahrscheinlichkeit einer Einparkabsicht des Fahrers des Kraftfahrzeugs abgeschätzt werden kann, sodass stets nur dann, wenn der Fahrer dies tatsächlich wünscht und/oder beabsichtigt, das unterstützende Fahrerassistenzsystem für das Einparken automatisch aktiviert oder zumindest angeboten wird. Das hierbei beschriebene Verfahren ist besonders zuverlässig, da die Lenkeingabeinformation als Einparkanzeicheninformation berücksichtigt wird, wobei es sich um ein besonders zuverlässiges Anzeichen für das Einparken des Kraftfahrzeugs handelt. Daher kann zuverlässig die Einparkabsicht des Fahrers des Kraftfahrzeugs erkannt werden.

Unter einer Information im Sinne der Erfindung werden beispielsweise Daten und/oder Werte verstanden, die letztendlich entsprechende Details betreffend beispielsweise den Parkbereich, das Einparkanzeichen und/oder die Lenkeingabe aufweisen.

Weiterhin sieht es die Erfindung vor, dass ein Umkehrbereich bestimmt wird, in dem das Kraftfahrzeug beim Einparken in den unbelegten Parkbereich mit einer Wahrscheinlichkeit, die größer als eine Mindestwahrscheinlichkeit ist, einen Fahrtrichtungswechsel durchführen wird, falls das Kraftfahrzeug von einer aktuellen Position und Ausrichtung des Kraftfahrzeugs aus in den unbelegten Parkbereich einparkt. Es wird also für das Kraftfahrzeug ausgehend von dessen aktueller Position und dessen aktueller Ausrichtung relativ zum unbelegten Parkbereich eine Umkehrpunktanalyse durchgeführt, deren Ergebnis als Anzeichen für ein Einparken des Kraftfahrzeugs herangezogen werden kann. Im bestimmten Umkehrbereich müsste das Kraftfahrzeug seine Fahrtrichtung wechseln, um in den unbelegten Parkbereich einparken zu können. Der Umkehrbereich ist also ein Teilbereich einer vorhergesagten Fahrtrajektorie, entlang der das Einparken auf dem unbelegten Parkbereich ausgehend von der aktuellen Position und Ausrichtung des Kraftfahrzeugs möglich ist. Die zumindest eine Einparkanzeicheninformation beschreibt in diesem Fall, ob das Kraftfahrzeug zumindest mit einem Referenzpunkt des Kraftfahrzeugs tatsächlich in den bestimmten Umkehrbereich bewegt wird. Es wird also überprüft, ob beispielsweise ein Mittelpunkt einer Hinterradachse des Kraftfahrzeugs, der hier exemplarisch als Referenzpunkt gewählt werden kann, in den bestimmten Umkehrbereich bewegt wird oder wurde. Sobald dieser Referenzpunkt auf der Hinterradachse des Kraftfahrzeugs über einen Rand des Umkehrbereichs in den Umkehrbereich bewegt wurde, ist beispielsweise ein anschließendes einzügiges Einparkmanöver in den unbelegten Parkbereich möglich. Es kann daher angenommen werden, dass sich der Fahrer zunächst mit dem Kraftfahrzeug in den Umkehrbereich begeben wird, um von diesem aus das Einparken in den unbelegten Parkbereich durchzuführen. Mit dem Erkennen des Einfahrens in den Umkehrbereich mittels des Beobachtens einer Positionsbewegung des Referenzpunktes des Kraftfahrzeugs kann also das Einparken des Kraftfahrzeugs in den unbelegten Parkbereich erkannt werden.

Hierbei wird die Einparkrichtungsinformation bevorzugt berücksichtigt, um zuverlässig vorherzusagen, wo der Umkehrbereich relativ zum unbelegten Parkbereich sowie zur aktuellen Position und Ausrichtung des Kraftfahrzeugs angeordnet ist. Letztendlich liegen der hier beschriebenen Umkehrpunktanalyse die bekannten charakteristischen und somit typischen Fahrtrajektorien für verschiedene Einparkmanöver auf unterschiedlich relativ zum Straßenverlauf angeordneten unbelegten Parkbereichen zugrunde.

Zudem sieht ein die Erfindung alternativ oder zusätzlich vor, dass eine Position und Ausrichtung des Kraftfahrzeugs auf einer dem Kraftfahrzeug bereitgestellten Landkarte ermittelt wird. Im Kraftfahrzeug liegen beispielsweise im Navigationssystem und/oder einer Speichereinrichtung des Kraftfahrzeugs Landkartendaten bereit, die die aktuelle Umgebung des Kraftfahrzeugs beschreiben. Zudem ist das Kraftfahrzeug dazu ausgebildet, seine eigene aktuelle Position und Ausrichtung bestimmten zu können, was beispielsweise mittels einer entsprechenden Sensoreinrichtung des Kraftfahrzeugs erfolgt. Für die Positionsbestimmung kann beispielsweise eine Positionierung des Kraftfahrzeugs mithilfe eines globalen Navigationssatellitensystems GNSS (Global Navigation Satellite System) erfolgen. Letztendlich erfolgt also eine Bestimmung der Position und der Ausrichtung des Kraftfahrzeugs auf beispielsweise einer aktuell vom Kraftfahrzeug befahrenen Straße, die wiederum in der bereitgestellten Landkarte verortet wird.

Der Landkarte liegen typischerweise Informationen über eine zu erwartende Anordnung des Kraftfahrzeugs an der aktuellen Position vor, da typischerweise beispielsweise auf einer Straße eine bestimmte fest vorgegebene Fahrtrichtung und somit Ausrichtung des Kraftfahrzeugs vorgegeben ist. Wenn kein Einparken erfolgt, sollte die Ausrichtung des Kraftfahrzeugs im Wesentlichen parallel zum Straßenverlauf und zudem entsprechend der Fahrtrichtung liegen.

Die zumindest eine Einparkanzeicheninformation weist nun eine Abweichungsinformation auf, die eine Abweichung zwischen der ermittelten Ausrichtung des Kraftfahrzeugs und einer für die ermittelte Position typischen Ausrichtung des Kraftfahrzeugs beschreibt. Fährt das Kraftfahrzeug beispielsweise aktuell nicht in etwa parallel zum Straßenverlauf, kann diese Abweichung als ein Anzeichen für ein Einparken des Kraftfahrzeugs gesehen werden. Denn die Abweichung deutet darauf hin, dass beispielsweise das Kraftfahrzeug bereits dabei ist, in den seitlich oder quer zum Straßenverlauf angeordneten unbelegten Parkbereich zu fahren oder bereits auf diesem fährt. Das Kraftfahrzeug weist in diesem Beispiel nicht die Ausrichtung auf, die es in der ermittelten Position typischerweise einnehmen sollte, da es beispielsweise bereits in einem Winkel von beispielsweise 45 zur typischen Ausrichtung relativ zum Straßenverlauf fährt oder zumindest angeordnet ist. Als typisches Verhalten und somit als typische Ausrichtung wird beispielsweise ein in etwa mittig auf einer Fahrspur und in Richtung des Fahrspurverlaufs orientiertes Fahren des Kraftfahrzeugs verstanden. Ein Winkel zwischen der ermittelten Ausrichtung und der typischen Ausrichtung von größer als zehn, 15, 20, 30, 40, 50, 60, 70, 80 oder bis zu 90 Grad könnte als Anzeichen für das Einparken auf dem unbelegten Parkbereich gewertet werden. Es kann also letztendlich eine kartenbasierte Einparkanzeicheninformation erfasst und berücksichtigt werden.

Ferner sieht es die Erfindung alternativ oder zusätzlich vor, dass die zumindest eine Einparkanzeicheninformation eine Parklückenbewertungsinformation aufweist. Die Parklückenbewertungsinformation wird unter Berücksichtigung der Parkbereichsinformation ermittelt und weist zumindest eine von folgenden Informationen über den unbelegten Parkbereich auf: eine Größe des unbelegten Parkbereichs im Vergleich zu einer zeitlich zuvor erfassten Parkbereichsfläche. Die zeitlich zuvor erfasste Parkbereichsfläche ist ein zeitlich zuvor erfasster weiteren unbelegten Parkbereich. Dies ist beispielsweise immer dann möglich, wenn eine zum aktuelle Zeitpunkt erfasste Parklücke größer als eine beispielsweise zeitlich kurz zuvor erfasste andere Parklücke ist, sodass darauf geschlossen werden kann, dass der Fahrer beispielsweise eher in den erstgenannten räumlich größeren unbelegten Parkbereich einparken wird als in den im Vergleich dazu kleineren zeitlich früher erfassten Parkbereich, wodurch eine Wahrscheinlichkeit eines Einparkens auf dem größeren unbelegten Parkbereich im Vergleich zum zeitlich zuvor erfassten weiteren jedoch kleineren unbelegten Parkbereich größer ist. Die Größe des Parkbereichs kann hier also das Anzeichen für das Einparken des Kraftfahrzeugs sein.

Eine weitere Information über den unbelegten Parkbereich kann eine räumliche Nähe zu einem Zielort des Kraftfahrzeugs sein. Findet sich beispielsweise ein erkannter unbelegter Parkbereich räumlich nah an einem Zielort, der beispielsweise ein Navigationsziel des Navigationssystems des Kraftfahrzeugs und/oder eine im Kraftfahrzeug hinterlegte Heimatadresse ist, kann hierin ebenfalls ein Anzeichen für ein Einparken auf diesem unbelegten Parkbereich gesehen werden.

Eine weitere Information betrifft eine Übersichtlichkeit des unbelegten Parkbereichs. Hierbei wird eine räumliche Ausdehnung von zumindest einem erfassten Objekt in der Umgebung des unbelegten Parkbereichs berücksichtigt, wobei dieses Objekte beispielsweise mittels der Umgebungserfassungseinrichtung des Kraftfahrzeugs erfasst wird. Weist beispielsweise das Objekt eine im Vergleich zu einer Fahrzeughöhe des Kraftfahrzeugs geringe Höhe auf, wie es beispielsweise bei einem andere Fahrzeug oder einer niederen baulichen Begrenzung des Parkbereichs der Fall ist, kann darauf geschlossen werden, dass der unbelegte Parkbereich vom Fahrer als übersichtlich wahrgenommen wird, was beispielsweise als starkes Anzeichen für das Einparken gewertet werden könnte. Befindet sich jedoch ein das Kraftfahrzeug deutlich überragendes Objekt in der Umgebung des Parkbereichs, zum Beispiel eine Wand, ein Gewächs, wie ein Baum, oder ein Gebäude mit einer Höhe, die größer als die Fahrzeughöhe ist, wird der Parkbereich gegebenenfalls als weniger übersichtlich vom Fahrer wahrgenommen. Die geringere Übersichtlichkeit kann darauf hindeuten, dass ein Einparken eher weniger wahrscheinlich ist.

Eine weitere Information kann eine räumliche Nähe zu einem für das Kraftfahrzeug reservierten Parkbereich sein. Es kann beispielsweise vorgesehen sein, dass der Fahrer des Kraftfahrzeugs bereits mittels einer entsprechenden Anwendung, wie einer dafür ausgelegten Applikation im Kraftfahrzeug und/oder auf dem mobilen Endgerät, einen vorgegebenen Parkbereich reserviert hat. Befindet sich nun der unbelegte Parkbereich im Bereich des reservierten Parkbereichs oder weist zumindest eine räumliche Überschneidung mit diesem auf, kann davon ausgegangen werden, dass der Fahrer beabsichtigt, in den reservierten Parkbereich einzuparken.

Ferner kann als Information eine Beurteilung durchgeführt werden, die unter Berücksichtigung zumindest einer der oben genannten Informationen ermittelt wird. Es kann also ein Rating des unbelegten Parkbereichs durchgeführt werden, bei dem eine einfache Erreichbarkeit, die Größe, die Nähe zum Zielort, die Übersichtlichkeit und/oder die räumliche Nähe zum reservierten Parkbereich berücksichtigt wird. Hierdurch wird festgestellt, ob beispielsweise im Falle von mehreren unbelegten Parkbereichen einer der mehreren unbelegten Parkbereiche hervorsticht und als besonders geeigneter Parkbereich mit einer besonders hohen Wahrscheinlichkeit für eine Einparkabsicht bewertet werden kann. In einer derartigen Beurteilung kann daher ein Anzeichen für ein Einparken des Kraftfahrzeugs gesehen werden.

Alternativ oder zusätzlich dazu kann es vorgesehen sein, ein charakteristisches Fahrverhalten des Fahrers des Kraftfahrzeugs zu erfassen und auszuwerten, sodass beispielsweise eine für den Fahrer typische Einparkbewegung erkannt und gespeichert werden kann. Hierfür kann über einen Mindestzeitraum das Fahrverhalten des Fahrers erfasst, gespeichert und ausgewertet werden. Das charakteristische Fahrverhalten beim Einparken kann bei einem Vergleich mit dem aktuellen Verhalten des Fahrers gegebenenfalls frühzeitig und zuverlässig als Anzeichen für ein Einparken des Kraftfahrzeugs durch ebendiesen Fahrer gewertet werden. Der Vergleich zwischen dem charakteristischen Fahrverhalten und dem aktuellen Fahrverhalten des Fahrers kann also eine weitere sinnvolle Einparkanzeicheninformation darstellen.

Zu der Erfindung gehören außerdem Ausführungsbeispiele, durch die sich weitere zusätzliche Vorteile ergeben können.

Ein erstes Ausführungsbeispiel sieht vor, dass eine Einparkrichtungsinformation ermittelt wird. Die Einparkrichtungsinformation beschreibt eine Richtung des Einparkens des Kraftfahrzeugs in den unbelegten Parkbereich. Die Einparkrichtungsinformation weist somit Daten auf, die beschreiben, ob das Kraftfahrzeug vorwärts oder rückwärts in den unbelegten Parkbereich einparken wird. Zudem kann mithilfe der Einparkrichtungsinformation unterschieden werden, ob es sich um eine längs einer aktuellen Fahrtrichtung des Kraftfahrzeugs angeordneten Parkbereich oder um einen beispielsweise quer oder zumindest schräg zur aktuellen Fahrtrichtung des Kraftfahrzeugs angeordneten Parkbereich handelt. Der längs angeordnete Parkbereich erstrecht sich im Wesentlichen parallel zum Straßenverlauf der an den Parkbereich angrenzenden Straße. Der längs angeordnete Parkbereich erstreckt sich im Wesentlichen parallel, wenn ein Winkel zwischen einer Längsrichtung des Parkbereichs und dem Straßenverlauf maximal zehn Grad beträgt. Bei einem größeren Winkel von größer als zehn Grad bis zu 90 Grad kann ein quer angeordneter Parkbereich angenommen werden. Als Richtung eines Einparkens können also beispielsweise folgende Richtungen unterschieden werden: längs vorwärts, quer vorwärts, längs rückwärts und/oder quer rückwärts.

Die Einparkrichtungsinformation kann durch Auswerten der zumindest einen Einparkanzeicheninformation und/oder der zumindest einen Parkbereichsinformation ermittelt werden. Insbesondere die Art des unbelegten Parkbereichs, also ob es sich um einen längs- oder querorientierten Parkbereich handelt, kann oftmals der zumindest einen Parkbereichsinformation entnommen werden. Inwiefern das Kraftfahrzeug vorwärts oder rückwärts einparken wird, lässt sich beispielsweise der Einparkanzeicheninformation in Form der Lenkeingabeinformation entnehmen, da eine Lenkeingabe des Fahrers des Kraftfahrzeugs je nachdem, ob dieser vorwärts oder rückwärts in den Parkbereich einparken möchte, unterschiedlich ausgestaltet ist.

Die Einparkrichtungsinformation wird beim Anwenden des situationsabhängigen Gewichtungskriteriums berücksichtigt. Es kann vorgesehen sein, dass beispielsweise eine Fahrtrajektorie zusammen mit der Einparkrichtungsinformation, die auf ein quer rückwärts erfolgendes Einparken hinweist, als stärkeres Anzeichen für die Einparkabsicht bewertet wird, als es beispielsweise bei einer Einparkrichtungsinformation, die auf ein quer vorwärts erfolgendes Einparken hinweist, der Fall wäre. Der Grund hierfür kann beispielsweise sein, dass bei einem Rückwärtseinparken die Lenkeingaben des Fahrers, also zum Beispiel die Fahrtrajektorie, oftmals deutlich stärker von einer bei einem Geradeausfahren des Kraftfahrzeugs gewählten Fahrtrajektorie abweicht und somit leichter von dieser zu unterscheiden ist, als dies beispielsweise beim Vorwärtseinparken der Fall ist. Das situationsabhängige Gewichtungskriterium berücksichtigt daher die Einparkrichtungsinformation, um zuverlässig den Einparkabsichtswahrscheinlichkeitswert bestimmen zu können. Hierdurch wird das Verfahren besonders aussagekräftig hinsichtlich der Gewichtung der Anzeichen für das Einparken des Kraftfahrzeugs.

In einem weiteren Ausführungsbeispiel ist es vorgesehen, dass die zumindest eine Parkbereichsinformation mittels einer Umgebungserfassungseinrichtung des Kraftfahrzeugs ermittelt und/oder von einer externen Einrichtung an das Kraftfahrzeug übermittelt wird. Die Parkbereichsinformation kann also mit einer kraftfahrzeugeigenen Vorrichtung, das heißt der Umgebungserfassungseinrichtung, die beispielsweise als Kamera ausgebildet ist, erfasst und ausgewertet werden. Hierfür kann im Kraftfahrzeug beispielsweise die Auswerteeinrichtung vorgesehen sein, die dazu ausgebildet ist, unter Anwendung von digitaler Bildverarbeitung auf die von der Umgebungserfassungseinrichtung erfassten Umgebungsdaten Informationen über den unbelegten Parkbereich auszuwerten und in Form der zumindest einen Parkbereichsinformation bereitzustellen. Alternativ oder zusätzlich dazu kann dem Kraftfahrzeug die zumindest eine Parkbereichsinformation von einer außerhalb des Kraftfahrzeugs angeordneten Einrichtung bereitgestellt werden. Hierfür kann beispielsweise eine Kommunikationsverbindung zwischen der externen Einrichtung und dem Kraftfahrzeug aufgebaut und/oder aufrechterhalten werden, über die die Parkbereichsinformation an das Kraftfahrzeug übermittelt wird. Die externe Einrichtung kann beispielsweise ein anderes Fahrzeug in der Umgebung des Kraftfahrzeugs und/oder eine Infrastruktureinrichtung in der Umgebung des Kraftfahrzeugs und/oder eine externe Recheneinrichtung sein, in der beispielsweise Informationen über den Parkbereich und/oder gegebenenfalls sogar den unbelegten Parkbereich in der Umgebung hinterlegt sind. Die entsprechende Information zur Übermittlung kann beispielsweise über eine Fahrzeug-zu-Fahrzeug- und/oder eine Fahrzeug-zu-Infrastruktur-Kommunikationsverbindung erfolgen. Die externe Einrichtung kann Rohdaten und/oder die bereits ausgewertete zumindest eine Parkbereichsinformation an das Kraftfahrzeug übermitteln. Die übermittelten Rohdaten können mittels der Auswerteeinrichtung, beispielsweise analog zu den Umgebungsdaten, ausgewertet werden.

Ein besonders bevorzugtes Ausführungsbeispiel zeichnet sich dadurch aus, dass die Lenkeingabeinformation eine Lenkbewegung des Kraftfahrzeugs beschreibt, insbesondere eine Fahrtrajektorie. Befindet sich der unbelegte Parkbereich beispielsweise auf einer in Fahrtrichtung rechten Seite zum Kraftfahrzeug und ist zum queren Einparken ausgebildet, führt der Fahrer des Kraftfahrzeugs typischerweise im Rahmen des Einparkens in den unbelegten Parkbereich einen Lenkeinschlag nach links durch, um für eine nachfolgende Rückwärtsfahrt zum quer rückwärts gerichteten Einparken in den unbelegten Parkbereich eine bessere Ausgangsposition zu haben. Der Fahrer führt also typischerweise eine Art Ausholen in in Fahrtrichtung links gelegener Richtung durch, wodurch eine Pendelbewegung des Kraftfahrzeugs erfolgt, die sich deutlich erkennbar in der Fahrtrajektorie widerspiegelt und dieser entnommen werden kann. Die Ausholbewegung in entgegengesetzter Richtung zur Anordnung des unbelegten Parkbereichs zur aktuellen Fahrtrichtung des Kraftfahrzeugs ist ein Anzeichen für das Einparken des Kraftfahrzeugs in den unbelegten Parkbereich, da es ein Indiz für ein bevorstehende Einparkmanöver, also das Einparken, darstellt. Die Ausholbewegung kann bei der Auswertung der Fahrtrajektorie mit geringem Aufwand und zuverlässig erkannt werden, sodass hier der Lenkbewegung des Kraftfahrzeugs eindeutig das Anzeichen für das Einparken des Kraftfahrzeugs entnommen werden kann.

Allerdings zeigen zahlreiche Fahrer, die dieselbe Einparkabsicht aufweisen, das heißt beispielsweise ebenfalls auf dem unbelegten Parkbereich quer rückwärts einparken wollen, keine derartige Ausholbewegung, da sie beispielsweise eine mehrzügige Einparkroutine durchführen möchten und daher nicht die beschriebene markante Pendelbewegung, die bei einem einzügigen Einparken erwartet wird, durchführen werden. Es ist daher zu berücksichtigen, dass die beschriebene markante Fahrtrajektorie je nach Fahrverhalten des Fahrers beobachtet werden kann oder nicht.

Als einzügiges Einparken wird ein Einparken in einem Zug verstanden, das heißt ohne temporäres Anhalten, gegebenenfalls Ändern eines Lenkwinkels im Stillstand, anschließendes Weiterfahren in abweichender, bevorzugt entgegengesetzter Fahrtrichtung, erneutes Anhalten, gegebenenfalls erneutes Ändern des Lenkwinkels und erst danach erfolgtem tatsächlichen Einfahren in den Parkbereich zum Einparken des Kraftfahrzeugs. Bei einem mehrzügigen Einparken werden jedoch die genannten mehreren Schritte beim Einparken, gegebenenfalls sogar mehrfach, ausgeführt, sodass mehrere voneinander unterscheidbare Fahrzüge zwischen einem Beginn des Einparkens und einem Beenden des Einparkens erfolgen.

Alternativ oder zusätzlich kann ein Vorwärtseinparken auf einem beispielsweise rechts zur aktuellen Fahrtrichtung des Kraftfahrzeugs angeordneten queren Parkbereich mit einer hierfür charakteristischen und somit typischen Fahrtrajektorie verknüpft sein. Die entsprechende typische Fahrtrajektorie weist eine S-Kurvenform auf. Die S-Kurvenform kann relativ schwach ausgeprägt sein verglichen mit einem Kurvenverlauf, der bei einer Ähnlichkeit mit dem Buchstaben S regelmäßig erwartet werden würde. Die S-Kurvenform kann bei einem einzügigen Einparken auf dem Parkbereich abgefahren werden und gegebenenfalls frühzeitig erkannt und als Indiz für den Einparkwunsch des Fahrers gewertet werden, und somit als Einparkanzeicheninformation ein starkes Anzeichen für das Einparken des Kraftfahrzeugs ergeben. Die S-Kurvenform zeichnet sich dadurch aus, dass das Kraftfahrzeug zunächst in entgegengesetzter Richtung zum Parkbereich, also hier in Fahrtrichtung nach links, ausschlägt, um auszuholen und dann steil auf den Parkbereich zufährt, das heißt hier nach rechts umlenkt und steil in den queren Parkbereich einparkt. Es ist jedoch möglich, dass beispielsweise bei einem mehrzügigen Einparken in den rechts zur Fahrtrichtung angeordneten queren Parkbereich der Fahrer nicht die beschriebene markante S-kurvenförmige Fahrtrajektorie fährt, sondern beispielsweise eine relativ flache Anfahrtstrajektorie abfährt, die im Wesentlichen parallel zum Straßenverlauf verläuft, und dann ohne Ausholen mehrzügig in den unbelegten Parkbereich einparkt. In diesem Fall kann beispielsweise der Lenkbewegung des Kraftfahrzeugs kein deutlich erkennbares und daher nur ein schwaches Anzeichen für das Einparken des Kraftfahrzeugs entnommen werden, sodass beispielsweise nur eine Einparkabsichtswahrscheinlichkeit, die kleiner als der Wahrscheinlichkeitsgrenzwert ist, nach Anwendung des situationsabhängigen Gewichtungskriteriums auf diese Einparkanzeicheninformation bestimmt werden kann.

Alternativ oder zusätzlich dazu ist es möglich, dass sich aus der Fahrtrajektorie die Parkbereichsinformation abschätzen lässt, da beispielsweise eine Position und/oder Ausrichtung des Kraftfahrzeugs entlang der Fahrtrajektorie Rückschlüsse auf die Ausgestaltung des unbelegten Parkbereichs ermöglichen können.

Letztendlich kann durch die Auswertung der Lenkbewegung ein je nach Situation starkes Anzeichen für das Einparken des Kraftfahrzeugs bereitgestellt sein, sodass je nach situationsabhängigem Gewichtungskriterium allein schon aus der Lenkeingabeinformation auf den Einparkabsichtswahrscheinlichkeitswert geschlossen werden kann, der größer als der Wahrscheinlichkeitsgrenzwert ist. Dies führt zu einer besonders schnell erreichten automatischen Aktivieren oder Anbieten des Aktivierens des Fahrerassistenzsystems.

In einem zusätzlichen Ausführungsbeispiel beschreibt die Lenkeingabeinformation einen Lenkeinschlagwinkel einer Lenkung des Kraftfahrzeugs. Insbesondere beschreibt sie den Lenkeinschlagwinkel, den die Lenkung während eines Stillstands des Kraftfahrzeugs einnimmt. Es kann also von der Einparkanzeicheninformation der Lenkeinschlag des Kraftfahrzeugs im Stand, nachdem das Kraftfahrzeug beispielsweise in der Umgebung des unbelegten Parkbereichs angehalten hat, umfasst werden. Dies ist beispielsweise immer dann sinnvoll, wenn weder die Ausholbewegung beziehungsweise Pendelbewegung noch die S-kurvenförmige Fahrtrajektorie erkannt wird, sondern der Fahrer das Kraftfahrzeug lediglich in der Nähe des unbelegten Parkbereichs anhält, um dann bereits im Stand einen gewünschten Lenkeinschlagwinkel einzustellen, um daraufhin in einem anschließenden Fahrmanöver in den unbelegten Parkbereich einzufahren. Dies kann beispielsweise immer dann der Fall sein, wenn der Lenkeinschlagwinkel von seiner Anordnung zu einer Fahrzeuglängsrichtung her zu einer Anordnung des unbelegten Parkbereichs relativ zur Ausrichtung des Kraftfahrzeugs korrespondiert. Findet sich beispielsweise ein zum queren Einparken vorgesehener Parkbereich zwischen zwei anderen bereits geparkten Fahrzeugen in Fahrtrichtung rechts hinter dem Kraftfahrzeug, kann ein Lenkeinschlagwinkel beispielsweise von Rädern einer Vorderachse des Kraftfahrzeugs in Fahrtrichtung rechts relativ zur Fahrzeuglängsrichtung darauf hindeuten, dass der Fahrer des Kraftfahrzeugs zu einem Rückwärtseinfahren in den beschriebenen unbelegten Parkbereich ansetzt. Durch die Auswertung des Lenkeinschlagwinkels, insbesondere während das Kraftfahrzeug sich nicht bewegt und somit im Stillstand steht, kann somit ebenfalls ein Anzeichen für ein anstehendes Einparken des Kraftfahrzeugs in den unbelegten Parkbereich erkannt werden, das bei der Bestimmung der Einparkabsichtswahrscheinlichkeit berücksichtigt werden kann, um diesen zuverlässig bestimmen zu können.

Weiterhin sieht ein Ausführungsbeispiel vor, dass die Einparkanzeicheninformation eine Relativanordnungsinformation aufweist, die eine aktuelle relative Anordnung des Kraftfahrzeugs zum unbelegten Parkbereich beschreibt. Insbesondere kann die Relativanordnungsinformation einen seitlichen Abstand und/oder einen Winkel des Kraftfahrzeugs relativ zum unbelegten Parkbereich beschreiben. Der seitliche Abstand des Kraftfahrzeugs zu beispielsweise bereits geparkten anderen Fahrzeugen in einer Parkreihe am Rand der Straße, auf der das Kraftfahrzeug fährt, kann ein Anzeichen für eine Einparkabsicht sein. Insbesondere bei einer Kombination von einem beispielsweise nahen Heranfahren an den unbelegten Parkbereich mit der bereits beschriebenen Ausholbewegung, die der Fahrtrajektorie entnommen werden kann, kann zuverlässig darauf geschlossen werden, dass der Fahrer des Kraftfahrzeugs eine möglichst vorteilhafte Ausgangsposition mit einem geringen Fahrzeugversatz zum unbelegten Parkbereich anfahren möchte, um besonders leicht in den unbelegten Parkbereich zwischen den geparkten Fahrzeugen einparken zu können.

Hierbei ist zwischen Vorwärts- und Rückwärtsparkvorgängen zu unterscheiden, denn bei einem Parkvorgang, der beispielsweise rückwärts längs erfolgt, ist ein kleiner seitlicher Abstand für ein einzügiges oder zumindest wenigzügiges Parken vorteilhaft, wohingegen beispielsweise bei einem vorwärts quer erfolgenden Einparken eher die beschriebene S-kurvenförmige Ausholbewegung und damit verbunden gegebenenfalls ein großer seitlicher Abstand des Kraftfahrzeugs zum unbelegten Parkbereich vorteilhaft für den Einparkvorgang ist. Bei der Berücksichtigung des seitlichen Abstands als Einparkanzeicheninformation wird bevorzugt stets die Einparkrichtungsinformation berücksichtigt, um besonders zuverlässig den entsprechenden Einparkabsichtswahrscheinlichkeitswert bestimmen zu können.

Der Winkel des Kraftfahrzeugs relativ zum unbelegten Parkbereich ist bevorzugt in Kombination mit der Einparkrichtungsinformation zu bewerten. Beispielsweise wird bei einem Winkel zwischen der Fahrtrichtung und somit der Fahrzeuglängsrichtung des Kraftfahrzeugs und dem unbelegten Parkbereich, der im Wesentlichen 90 Grad beträgt, oftmals darauf geschlossen, dass überhaupt kein Anzeichen für ein Einparken des Kraftfahrzeugs vorliegt. Ist der Winkel jedoch deutlich größer als 90 Grad, beträgt er also beispielsweise zwischen über 90 und 180 Grad, kann ein Anzeichen für ein Einparken in einen in Fahrtrichtung rechts angeordneten Parkbereich erkannt werden. Ist der Winkel wiederum kleiner als 90 Grad und somit zwischen 0 und kleiner als 90 Grad, ist beispielsweise hierin ein Anzeichen für ein Einparken in einen in Fahrtrichtung rechts angeordneten Parkbereich erkennbar. Der Winkel des Kraftfahrzeugs relativ zum unbelegten Parkbereich kann also als ein weiteres Anzeichen für ein Einparken des Kraftfahrzeugs in den unbelegten Parkbereich ausgewertet werden, sodass dieser Winkel beim Ermitteln des Einparkabsichtswahrscheinlichkeitswerts zumindest berücksichtigt werden kann.

Der Winkel des Kraftfahrzeugs zum unbelegten Parkbereich kann beispielsweise aus der Fahrtrajektorie in Kombination mit der erfassten Lenkbewegung des Kraftfahrzeugs bestimmt werden und dann beispielsweise von der Lenkeingabeinformation umfasst werden. Der Winkel zwischen Fahrzeug und Parkbereich kann alternativ oder zusätzlich mittels einer entsprechenden Sensoreinrichtung des Kraftfahrzeugs unabhängig von der Auswertung der Lenkeingabe des Fahrers ermittelt und daraufhin berücksichtigt werden.

Ein vorteilhaftes Ausführungsbeispiel sieht vor, dass die zumindest eine Einparkanzeicheninformation eine Blinkerzustandsinformation aufweist, die einen Zustand eines Blinkers des Kraftfahrzeugs beschreibt. Es wird also eine Aktivierung eines Blinkers des Kraftfahrzeugs ausgewertet. Ist der Blinker beispielsweise eingeschaltet, obwohl beispielsweise Navigationsdaten keine Abbiegung und/oder Kreuzung in der Umgebung des Kraftfahrzeugs aufweisen, kann dies als ein Anzeichen für das Einparken des Kraftfahrzeugs in den unbelegten Parkbereich angenommen werden. Es kann die Wahl des Blinkers ausgewertet werden, das heißt, es kann berücksichtigt werden, ob ein in Fahrzeuglängsrichtung links oder rechts im Kraftfahrzeug angeordneter Blinker aktiviert wird. Hieraus kann eine Anordnung des unbelegten Parkbereichs relativ zur Fahrtrichtung des Kraftfahrzeugs bestimmt werden, wodurch die Parkbereichsinformation sowie die Einparkrichtungsinformation ermittelt und/oder deren Bestimmung unterstützt und/oder die jeweilige bestimmte Information überprüft werden kann.

Es ist hierbei mittels des situationsabhängigen Gewichtungskriteriums berücksichtigbar, wo sich das Kraftfahrzeug aktuell befindet, da beispielsweise in einer als Parkumgebung definierten Umgebung, beispielsweise in einem Parkhaus, besonders zuverlässig ein Blinker des Kraftfahrzeugs beim Einparken vom Fahrer aktiviert wird, wohingegen er dies in einer verkehrsberuhigten Umgebung, wie beispielsweise in einem verkehrsarmen Wohngebiet, womöglich unterlässt, beispielsweise bei einem vom Fahrer erkannten Fehlen anderer Verkehrsteilnehmer. Je nach Situation ist das Aktivieren oder das fehlende Aktivieren des Blinkers ein schwaches oder stärkeres Anzeichen für die Einparkabsicht.

Des Weiteren ist es in einem Ausführungsbeispiel vorgesehen, dass die zumindest eine Einparkanzeicheninformation eine Blickrichtungsinformation aufweist, die eine Blickrichtung und/oder Blickdauer des Blicks des Fahrers beschreibt. Hierfür kann beispielsweise auf Messdaten einer Innenraumkamera des Kraftfahrzeugs zurückgegriffen werden, die dazu ausgebildet ist, eine Blickrichtung des Fahrers zu erfassen und gegebenenfalls ebenfalls auszuwerten. Alternativ oder zusätzlich können die Messdaten der Innenraumkamera mittels der Auswerteeinrichtung ausgewertet werden. Es wird also mithilfe beispielsweise einer den Fahrer beobachtenden Kamera die Blickrichtung des Fahrers erfasst.

Während einer Suche nach einem unbelegten Parkbereich bewegt der Fahrer üblicherweise seinen Kopf relativ schnell für jeweils einen zeitlich kurzen Zeitraum relativ weit nach links beziehungsweise rechts relativ zur Fahrtrichtung des Kraftfahrzeugs. Hierin kann eine typische Kopfbewegung erkannt werden, die der Fahrer während einer Parkplatzsuchfahrt typischerweise durchführt. In einer Kombination von Blickrichtung und Blickdauer kann somit ein Anzeichen für ein Einparken des Kraftfahrzeugs erkannt werden, was bei der Bestimmung der Einparkabsichtswahrscheinlichkeit berücksichtigt werden kann. Sobald der Fahrer den unbelegten Parkbereich optisch gefunden hat, verbleibt sein Blick typischerweise für eine Blickdauer von einer Mindestdauer auf dem unbelegten Parkbereich. Auch in diesem für eine vorgegebene Mindestblickdauer anhaltenden Blick in eine bestimmte Blickrichtung kann somit ein Anzeichen für ein Einparken des Kraftfahrzeugs in den unbelegten Parkbereich erkannt werden. Hierbei ist es stets relevant, dass die ermittelte Blickrichtung auch mit einer Anordnung des unbelegten Parkbereichs relativ zum Fahrer des Kraftfahrzeugs und somit zur Ausrichtung des Kraftfahrzeugs korreliert. Es wird also letztendlich bei dem Auswerten der Blickrichtungsinformation als Einparkanzeicheninformation die erfasste Parkbereichsinformation berücksichtigt. Oftmals kann die Blickrichtungsinformation als starkes Anzeichen für das Einparken des Kraftfahrzeugs in den Parkbereich betrachtet werden.

Ferner sieht ein Ausführungsbeispiel vor, dass die zumindest eine Einparkanzeicheninformation eine Fahrgeschwindigkeitsinformation aufweist, die eine Abweichung einer aktuellen Geschwindigkeit des Kraftfahrzeugs von einer Soll-Geschwindigkeit beschreibt. Die Soll-Geschwindigkeit wird hierfür insbesondere mittels einer Verkehrszeichenerkennung ermittelt, von anderen Fahrzeugen in der Umgebung des Kraftfahrzeugs an das Kraftfahrzeug übermittelt und/oder mittels der Umgebungserfassungseinrichtung des Kraftfahrzeugs erfasst. Diesem Vorgehen liegt der Gedanke zugrunde, dass bei einer Parkplatzsuche üblicherweise der Fahrer mit einer Geschwindigkeit fährt, die im Vergleich zu einer für die aktuelle Position sowie eine Straßenart der Straße, auf der das Kraftfahrzeug aktuell fährt, üblichen Geschwindigkeit klein ist. Durch einen Abgleich der aktuellen erfassten Geschwindigkeit mit der Soll-Geschwindigkeit lässt sich somit erkennen, ob der Fahrer beispielsweise aufgrund einer Parkplatzsuche sein Kraftfahrzeug abgebremst hat, wie dies oftmals bei einer Parkbereichssuche der Fall ist.

Um die Soll-Geschwindigkeit mithilfe der Umgebungserfassungseinrichtung des Kraftfahrzeugs zu erfassen, werden beispielsweise mittels des Radarsensors und/oder der Kamera des Kraftfahrzeugs andere Verkehrsteilnehmer in der Umgebung des Kraftfahrzeugs erfasst und die hierbei erfassten Daten derart ausgewertet, dass die Geschwindigkeit der jeweiligen anderen Verkehrsteilnehmer beziffert werden kann. Hierfür weist das Kraftfahrzeug, beispielsweise in der Auswerteeinrichtung des Kraftfahrzeugs, ein entsprechendes Geschwindigkeitsauswertekriterium auf, das hier auf die Daten, die von der Umgebungserfassungseinrichtung des Kraftfahrzeugs erfasst wurden, angewendet wird.

Die Verkehrszeichenerkennung kann beispielsweise auf den Daten der Umgebungserfassungseinrichtung des Kraftfahrzeugs basieren. Hierbei wird eine lokale Maximalgeschwindigkeit erkannt, die als Soll-Geschwindigkeit angenommen wird. Es kann alternativ oder zusätzlich die Soll-Geschwindigkeit in der Landkarte im Kraftfahrzeug hinterlegt und somit bereits dem Kraftfahrzeug bekannt sein. Falls ein anderes Fahrzeug in der Umgebung des Kraftfahrzeugs beispielsweise über die Verkehrszeichenerkennung verfügt und/oder mittels seiner Umgebungserfassungseinrichtung und/oder aus einer im anderen Fahrzeug hinterlegten Landkarte die Soll-Geschwindigkeit feststellen kann, kann diese Information mittels beispielsweise einer Kommunikationsverbindung zwischen dem anderen Fahrzeug und dem Kraftfahrzeug an das Kraftfahrzeug übermittelt werden.

Es ist außerdem zu berücksichtigen, dass in der Nähe des vom Fahrer erkannten unbelegten Parkbereichs oftmals das Kraftfahrzeug bis zum Stillstand abgebremst wird, wodurch die aktuelle Geschwindigkeit im Vergleich zur Soll-Geschwindigkeit reduziert wird. Wird nun zudem mittels beispielsweise der Umgebungserfassungseinrichtung des Kraftfahrzeugs erkannt, dass ein vorausfahrendes Fahrzeug ungebremst weiterfährt und/oder keine Kreuzung und/oder auf rot wechselnde oder geschaltete Ampel in der Umgebung zu erkennen ist, kann darauf geschlossen werden, dass in der Geschwindigkeitsreduktion und somit in der Abweichung der aktuellen Geschwindigkeit von der Soll-Geschwindigkeit ein starkes Anzeichen für das Einparken des Kraftfahrzeugs erkannt werden kann. Es kann also beispielsweise eine aktuelle Verkehrsbedingung als Auslöser für die Abweichung der aktuellen Geschwindigkeit von der Soll-Geschwindigkeit ausgeschlossen werden. Dies erlaubt, die Abweichung der Geschwindigkeit als ein Indiz für die Einparkabsicht des Fahrers des Kraftfahrzeugs zu bewerten. Es kann eine mittels einer Sensoreinrichtung des Kraftfahrzeugs erfasste Fahrgeschwindigkeit und/oder eine Betätigung eines Beschleunigungs- und/oder Bremspedals des Kraftfahrzeugs derart ausgewertet werden, dass die aktuelle Geschwindigkeit bekannt ist.

In einem Ausführungsbeispiel ist es vorgesehen, dass mehrere unbelegte Parkbereiche erfasst werden und für jeden der mehreren erfassten unbelegten Parkbereiche der Einparkabsichtswahrscheinlichkeitswert ermittelt wird. Falls mehrere ermittelte Einparkabsichtswahrscheinlichkeitswerte größer als der Wahrscheinlichkeitsgrenzwert sind, wird nur für den unbelegten Parkbereich mit dem höchsten ermittelten Einparkabsichtswahrscheinlichkeitswert das automatische Aktivieren oder Anbieten des Aktivierens des Fahrerassistenzsystems durchgeführt. Es kann also jedem erkannten und prinzipiell geeigneten Parkbereich ein Einparkabsichtswahrscheinlichkeitswert zugewiesen werden, der angibt, mit welcher Wahrscheinlichkeit der Fahrer dort einparken wird. Das beschriebene Verfahren ist somit nicht nur auf Szenarien anwendbar, in denen genau ein unbelegter Parkbereich anhand der Parkbereichsinformation erkannt wird, sondern kann ebenfalls in Situationen angewendet werden, in denen der Fahrer eine Auswahl zwischen mehreren unbelegten Parkbereichen treffen kann. Bereits durch die Auswertung der Lenkeingabeinformation, das heißt durch das Berücksichtigen dieser Information als Einparkanzeicheninformation, kann darauf geschlossen werden, auf welchen der mehreren unbelegten Parkbereichen das Kraftfahrzeug mit welcher Wahrscheinlichkeit einparken wird. Einer der mehreren unbelegten Parkbereich wird den höchsten ermittelten Einparkabsichtswahrscheinlichkeitswert aufweisen, sodass für das Einparken in genau diesen unbelegten Parkbereich beispielsweise das automatische Aktivieren erfolgen kann. Das Verfahren ist dadurch in vielseitigen Umgebungen und Situationen anwendbar.

Darüber hinaus ist es in einem Ausführungsbeispiel vorgesehen, dass das situationsabhängige Gewichtungskriterium zumindest eine von folgenden Situationsinformationen berücksichtigt: Eine Verkehrssituation in der Umgebung des Kraftfahrzeugs, eine Straßenart einer Straße, auf der sich das Kraftfahrzeug befindet, und/oder eine Infrastrukturzugehörigkeit der Umgebung des Kraftfahrzeugs, insbesondere eine Zugehörigkeit zu einem Parkplatz oder einem Parkhaus. Indem die Verkehrssituation in der Umgebung des Kraftfahrzeugs berücksichtigt wird, werden beispielsweise zumindest ein anderes Fahrzeug, ein Fußgänger, ein Objekte und/oder ein Radfahrer berücksichtigt, deren Verhalten gegebenenfalls Auswirkungen auf das Verhalten Fahrers haben werden. Befinden sich beispielsweise mehrere Fußgänger in der Umgebung des Kraftfahrzeugs, kann die Fahrgeschwindigkeitsinformation beispielsweise deutlich niedriger gewichtet werden, als dies der Fall wäre, wenn keine Fußgänger in der Umgebung des Kraftfahrzeugs erfasst werden würden. Denn die reduzierte Geschwindigkeit kann unter anderem auf die Anwesenheit der zahlreichen Fußgänger zurückgeführt werden und daher keine und/oder nur geringe Rückschlüsse auf die Einparkabsicht des Fahrers des Kraftfahrzeugs zulassen. Die Verkehrssituation umfasst ferner, ob zu einem aktuellen Zeitpunkt ein Stau oder stockender Verkehr in der Umgebung des Kraftfahrzeugs, insbesondere in Fahrtrichtung des Kraftfahrzeugs, herrscht. Sie umfasst ferner eine Relativanordnung zum Kraftfahrzeug sowie gegebenenfalls eine Geschwindigkeit, insbesondere eine Relativgeschwindigkeit zu Kraftfahrzeugs, des zumindest einen anderen Fahrzeugs, des Fußgängers, des Objekts und/oder des Radfahrers bestimmt. Die Straßenart beschreibt einen Typ der Straße, auf der das Kraftfahrzeug fährt, zum Beispiel eine Schnellstraße, eine Landstraße, eine Anzahl von Fahrspuren der Straße und/oder eine Spielstraße.

Es können letztendlich zahlreiche Verkehrs- und Situationskombinationen für die jeweils einzelnen Einparkanzeicheninformationen berücksichtigt werden. Letztendlich kann mithilfe des situationsabhängigen Gewichtungskriteriums unter Berücksichtigung der verschiedenen einzelnen beschriebenen Einparkanzeicheninformationen genau differenziert werden, in welcher Situation, welches Fahrverhalten des Fahrers des Kraftfahrzeugs als wie stark zu gewichtendes Anzeichen für das Einparken des Kraftfahrzeugs in den unbelegten Parkbereich angesehen werden kann. Letztendlich ermöglich dies das situationsabhängig genaue und zuverlässige automatische Aktivieren des Fahrerassistenzsystems beziehungsweise Anbieten des Aktivierens des Fahrerassistenzsystems.

Ein weiterer Aspekt der Erfindung betrifft das erfindungsgemäße Kraftfahrzeug. Das erfindungsgemäße Kraftfahrzeug ist dazu ausgebildet, das oben beschriebene Verfahren durchzuführen. Das Kraftfahrzeug ist also dazu ausgebildet, zumindest eine Parkbereichsinformation bereitgestellt zu bekommen, zumindest eine Einparkanzeicheninformation zu erfassen, den Einparkabsichtswahrscheinlichkeitswert zu ermitteln und, falls der ermittelte Einparkabsichtswahrscheinlichkeitswert größer als der Wahrscheinlichkeitsgrenzwert ist, automatisch das Fahrerassistenzsystem zum Unterstützen des Einparkens des Kraftfahrzeugs in den unbelegten Parkbereich zu aktivieren oder das Aktivieren des Fahrerassistenzsystems anzubieten. Die im Zusammenhang mit dem erfindungsgemäßen Verfahren vorgestellten bevorzugten Ausführungsbeispiele und deren Vorteile gelten entsprechend, soweit anwendbar, für das erfindungsgemäße Kraftfahrzeug. Letztendlich ist das Kraftfahrzeug dazu ausgebildet, entsprechende Verfahrensschritte durchzuführen und somit vorrichtungsspezifische Merkmale aufzuweisen, die das Kraftfahrzeug benötigt, um das erfindungsgemäße Verfahren alleine oder in Kombination mit einzelnen genannten Ausführungsbeispielen des erfindungsgemäßen Verfahrens durchführen zu können. Das Kraftfahrzeug umfasst eine Umgebungserfassungseinrichtung, eine Sensoreinrichtung, eine Auswerteeinrichtung und eine Steuereinrichtung.

Das erfindungsgemäße Kraftfahrzeug kann als Kraftwagen, insbesondere als Personenkraftwagen oder Lastkraftwagen, oder als Personenbus oder als Motorrad ausgebildet sein.

Die Erfindung umfasst zudem die Auswerteeinrichtung für das Kraftfahrzeug. Die Auswerteeinrichtung weist eine Prozessoreinrichtung auf, die dazu eingerichtet ist, die Ausführungsbeispiele des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsbeispiele des erfindungsgemäßen Verfahrens durchzuführen. Der Programmcode kann in einem Datenspeicher der Prozessoreinrichtung gespeichert sein.

Die angegebenen konkreten Werte von Informationen oder Werten sind auch im Rahmen von Abweichungen, beispielsweise aufgrund von Messfehlern, Systemfehlern, DIN-Toleranzen etc., als vom Rahmen der Erfindung mitumfasst anzusehen.

Die Erfindung ist in den Ansprüchen definiert.

Im Folgenden werden Ausführungsbeispiele der Erfindung beschrieben. Hierzu zeigt:
- Fig. 1: eine schematische Darstellung eines Kraftfahrzeugs, das ein Verfahren zum Unterstützen eines Einparkens des Kraftfahrzeugs durchführen kann;
- Fig. 2: eine schematische Darstellung von verschiedenen Fahrtrajektorien bei einem Einparken eines Kraftfahrzeugs;
- Fig. 3: in schematischer Darstellung einen Signalplusgraphen eines Verfahrens zum Unterstützen eines Einparkens eines Kraftfahrzeugs; und
- Fig. 4: eine schematische Darstellung von einzelnen Einparkanzeicheninformationen, die in einem Verfahrensschritt des Verfahrens berücksichtigt werden.

Bei den im Folgenden erläuterten Ausführungsbeispielen handelt es sich um bevorzugte Ausführungsbeispiele der Erfindung. Des Weiteren sind die beschriebenen Ausführungsbeispiele auch durch weitere der in den Ansprüchen definierten Merkmale der Erfindung ergänzbar.

In den Figuren sind funktionsgleiche Elemente jeweils mit denselben Bezugszeichen versehen.

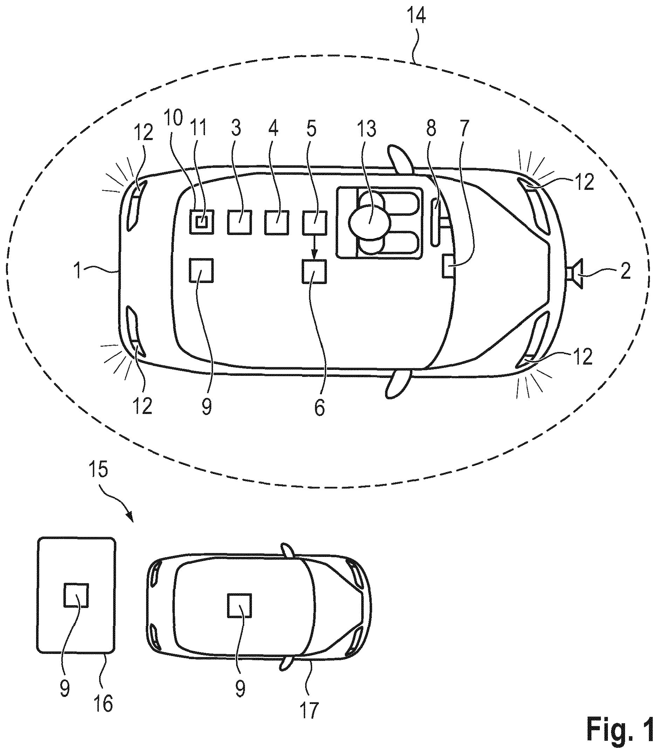

In Fig. 1 ist ein Kraftfahrzeug 1 skizziert. Das Kraftfahrzeug 1 weist eine Umgebungserfassungseinrichtung 2, beispielsweise eine Kamera, einen Radarsensor ein Lidar-Gerät und/oder eine Infrarotkamera, auf. Das Kraftfahrzeug 1 kann wie hier dargestellt eine Umgebungserfassungseinrichtung 2 in einem Frontbereich des Kraftfahrzeugs 1 aufweisen. Alternativ oder zusätzlich dazu können Umgebungserfassungseinrichtungen 2 in einem Heckbereich und/oder in einem jeweiligen Seitenbereich des Kraftfahrzeugs 1 angeordnet sein.

Das Kraftfahrzeug 1 weist eine Sensoreinrichtung 3 auf, die beispielsweise eine Einstellung einer Lenkung 8 des Kraftfahrzeugs 1 erfassen kann. Ferner weist das Kraftfahrzeug 1 eine Auswerteeinrichtung 4, eine Steuereinrichtung 5 und eine Anzeigeeinrichtung 7 auf. Die Steuereinrichtung 5 ist dazu ausgebildet, auf eine Längsführung und/oder Querführung des Kraftfahrzeugs 1 einzuwirken und beispielsweise ein Steuersignal eines Fahrerassistenzsystems 6 auszuführen und das Kraftfahrzeug 1 gemäß dem Steuersignal anzusteuern oder zu steuern. Das Fahrerassistenzsystem 6 ist beispielsweise als Einparkhilfe und/oder intelligenter Einparkhilfeassistent ausgebildet. Die Anzeigeeinrichtung 7 ist beispielsweise als berührungssensitiver oder nicht-berührungssensitiver Bildschirm ausgebildet. Der Anzeigeeinrichtung 7 zugeordnet kann zumindest ein Betätigungselement vorgesehen sein (hier nicht skizziert), beispielsweise eine Taste, ein Knopf und/oder ein Dreh-Drück-Schalter, bei dessen Betätigung eine auf der Anzeigeeinrichtung 7 angezeigte Auswahl ausgewählt und aktiviert werden kann. Bevorzugt ist die Anzeigeeinrichtung 7 als berührungssensitiver Bildschirm ausgebildet, auf dem ein Anzeigeelement angezeigt werden kann, das durch Berührung mit einer Hand eines Fahrers 13 des Kraftfahrzeugs 1 aktiviert und ausgewählt werden kann.

Das Kraftfahrzeug 1 weist eine Kommunikationsschnittstelle 9 auf. Ferner weist das Kraftfahrzeug 1 ein Navigationssystem 10 auf, in dem eine Landkarte 11 gespeichert ist. Das Navigationssystem 10 kann dazu ausgebildet sein, eine Positionsbestimmung des Kraftfahrzeugs 1 durchzuführen, beispielsweise basierend auf einem globalen Navigationssatellitensystem GNSS (Global Navigation Satellite System), zum Beispiel dem Globalen Positionsbestimmungssystem GPS. Das Kraftfahrzeug 1 weist zudem im Front- und Heckbereich jeweils zwei Blinker 12 auf, mithilfe derer ein bevorstehender Richtungswechsel des Kraftfahrzeugs 1 bei einer Fahrt des Kraftfahrzeugs 1 angezeigt werden kann. Im Kraftfahrzeug 1 befindet sich zudem der Fahrer 13, der manuell die Lenkung 8 des Kraftfahrzeugs 1 ansteuern kann, beispielsweise indem er mit seinen Händen ein Lenkrad des Kraftfahrzeugs 1 bedient.

Eine Fahrzeuglängsrichtung des Kraftfahrzeugs 1 ist hier als x-Richtung skizziert, wohingegen eine Fahrzeugquerrichtung des Kraftfahrzeugs 1 als y-Richtung eingezeichnet ist. Eine Fahrzeughochrichtung ist als z-Richtung skizziert.

In Fig. 1 ist eine Umgebung 14 des Kraftfahrzeugs 1 skizziert, wobei es sich beispielsweise um einen Erfassungsbereich der Umgebungserfassungseinrichtung 2 des Kraftfahrzeugs 1 handelt. Ferner ist in Fig. 1 eine externe Einrichtung 15 skizziert, die als externe Servereinrichtung 16 und/oder anderes Fahrzeug 17 ausgebildet sein kann. Die externe Einrichtung 15 kann Informationen mit dem Kraftfahrzeug 1 austauschen oder zumindest an dieses übermitteln. Hierfür können die Servereinrichtung 16 und/oder das Fahrzeug 17 jeweils ebenfalls die Kommunikationsschnittstelle 9 aufweisen, sodass zwischen der Kommunikationsschnittstelle 9 des Kraftfahrzeugs 1 und der Kommunikationsschnittstelle 9 der jeweiligen externen Einrichtung 15 Daten übermittelt werden können. Diese Daten können über eine Kommunikationsverbindung zwischen den Kommunikationsschnittstellen 9 übertragen werden, wobei die Kommunikationsverbindung als drahtlose Verbindung, beispielsweise über ein drahtloses lokales Netzwerk (WLAN für Wireless Local Area Network), eine Bluetooth-Verbindung und/oder ein mobiles Datennetzwerk, beispielsweise basierend auf dem Mobilfunkstandard Long Term Evolution (LTE), Long Term Evolution Advanced (LTE-A) oder Fifth Generation (5G), vorgesehen ist.

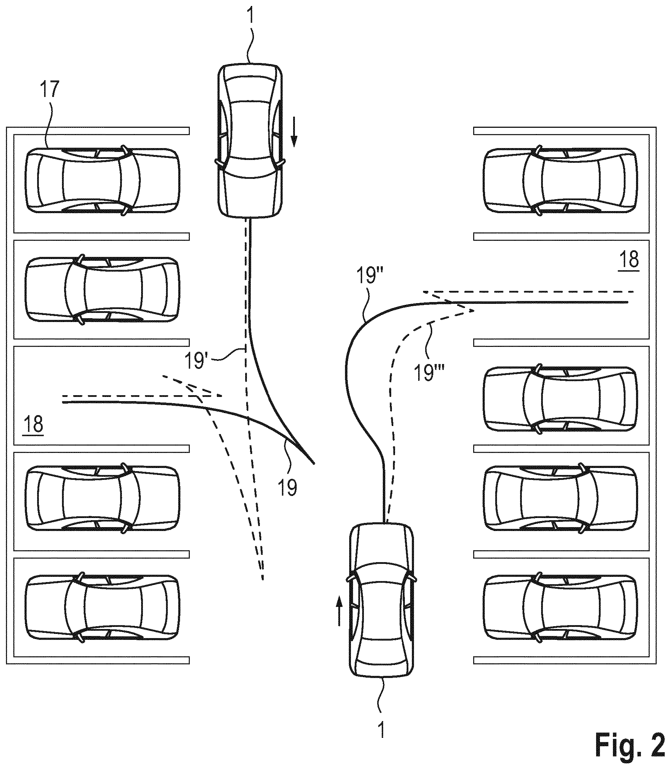

in Fig. 2 sind zwei verschiedene Einparkszenarien skizziert. Der Fahrer 13 des Kraftfahrzeugs 1 ist aktuell auf der Suche nach einem unbelegten Parkbereich 18. In einem ersten Beispiel ist in einem linken Bereich von Fig. 2 das Kraftfahrzeug 1 skizziert, das entlang einer Reihe von parkenden anderen Fahrzeugen 17 fährt, wobei es in den unbelegten Parkbereich 18 in Fahrtrichtung rechts vom Kraftfahrzeug 1 rückwärts einparkt. Für ein derartiges Einparken sind zwei beispielhafte Fahrtrajektorien 19 skizziert, die das Kraftfahrzeug 1 beim Einparken abfahren könnte. Die Fahrtrajektorie 19 zeigt eine Ausholbewegung, die als Pendelbewegung bezeichnet werden kann. Wenn der Fahrer 13 des Kraftfahrzeugs 1 typischerweise einzügig rückwärts in den gezeigten unbelegten Parkbereich 18 einparken will, weist seine Fahrtrajektorie 19 typischerweise einen markanten spitzen Punkt auf, bi zu dem der Fahrer 13 mit dem Kraftfahrzeug 1 ausholt, um daraufhin direkt rückwärts in den unbelegten Parkbereich 18 einparken zu können. Alternativ dazu ist es jedoch möglich, dass er eine mehrzügige Anfahrt in den unbelegten Parkbereich 18 vornehmen möchte, wobei er dann der Fahrtrajektorie 19' folgen würde. Bei dieser fährt das Kraftfahrzeug 1 zunächst weiter als bei der Fahrtrajektorie 19 an dem unbelegten Parkbereich 18 vorbei, führt keine Ausholbewegung durch und fährt mit gegebenenfalls mehrmaligen Vor- und Zurückrangieren rückwärts in den unbelegten Parkbereich 18 ein. In diesem Beispiel zum Rückwärtseinparkens ist vor allem der Fahrtrajektorie 19 ein eindeutiges Anzeichen für das Einparken des Kraftfahrzeugs 1 in den unbelegten Parkbereich 18 zu entnehmen, da die beschriebene Aushol- beziehungsweise Pendelbewegung als charakteristisch für eine Einparkabsicht des Fahrers 13 des Kraftfahrzeugs 1 gewertet werden kann.

Auf der rechten Seite von Fig. 2 ist ein weiteres Beispiel für einen Einparkvorgang gezeigt. Das hier skizzierte Kraftfahrzeug 1 fährt jedoch vorwärts in den unbelegten Parkbereich 18 zwischen bereits geparkten weiteren Fahrzeugen 17 ein. Auch hier gibt es zwei verschiedene mögliche Fahrtrajektorien 19" und 19‴. Folgt der Fahrer 13 der Fahrtrajektorie 19", ist mit einem einzügigen Vorwärtseinparken in den unbelegten Parkbereich 18 zu rechnen. Typischerweise fünf bis zehn Meter vor dem unbelegten Parkbereich 18 würde der Fahrer 13 mit dem Kraftfahrzeug 1 eine Ausholbewegung in Form einer S-förmigen Kurve durchführen, um dann typischerweise bereits in einem in etwa 90 Grad-Winkel zu seiner hier skizzierten Ausgangsposition in den unbelegten Parkbereich 18 einfahren zu können. Alternativ dazu ist es jedoch gemäß der Fahrtrajektorie 19‴möglich, dass das Kraftfahrzeug 1 zunächst in etwa parallel zu den bereits abgestellten weiteren Fahrzeugen 17 in Richtung des unbelegten Parkbereichs 18 fährt und sich erst unmittelbar vor dem unbelegten Parkbereich 18, gegebenenfalls durch mehrmaliges Vor- und Zurückfahren, also mehrzügig, der Orientierung des unbelegten Parkbereichs 18 annähert, um in diesen einparken zu können. Bei dem Vorwärtseinparken ist vor allem die Fahrtrajektorie 19" als besonders charakteristisch für ein Einparken des Kraftfahrzeugs 1 in den unbelegten Parkbereich 18 anzusehen, sodass in der Fahrtrajektorie 19" ein Anzeichen für ein Einparken des Kraftfahrzeugs 1 in den unbelegten Parkbereich 18 zu sehen ist.

Fig. 2 zeigt also, dass anhand einer Fahrtrajektorie 19, 19', 19", 19‴ ein Anzeichen für ein Einparken des Kraftfahrzeugs 1 in den unbelegten Parkbereich 18 gesehen werden kann.

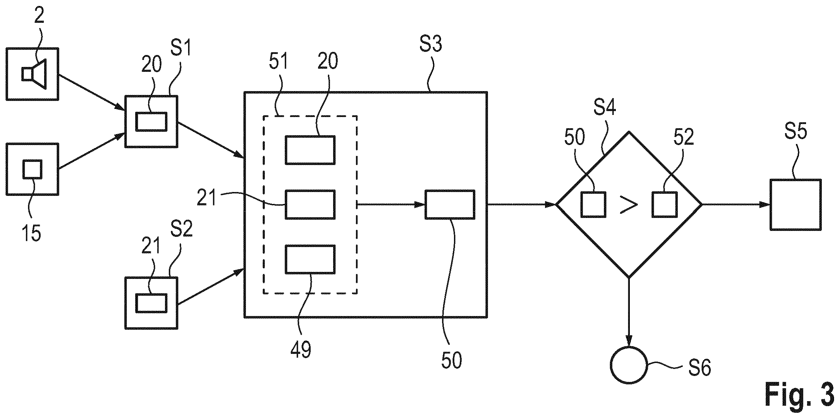

In Fig. 3 ist nun ein Verfahren zum Unterstützen eines Einparkens eines Kraftfahrzeugs in den unbelegten Parkbereich 18 skizziert. In einem Verfahrensschritt S1 erfolgt ein Bereitstellen von zumindest einer Parkbereichsinformation 20. Die Parkbereichsinformation 20 beschreibt den unbelegten Parkbereich 18 in der Umgebung 14 des Kraftfahrzeugs 1. Die Parkbereichsinformation 20 kann mittels der Umgebungserfassungseinrichtung 2 des Kraftfahrzeugs 1 ermittelt werden. Alternativ oder zusätzlich dazu, kann die Parkbereichsinformation 20 von der externen Einrichtung 15, das heißt von der Servereinrichtung 16 oder einem anderen Fahrzeug 17, an das Kraftfahrzeug 1 übermittelt werden, wobei dies mittels der Kommunikationsverbindung zwischen den jeweiligen Kommunikationsschnittstellen 9 erfolgt. Die Parkbereichsinformation 20 umfasst beispielsweise Koordinaten des unbelegten Parkbereichs 18 und verortet diesen beispielsweise in der Landkarte 11.

In einem weiteren Verfahrensschritt S2 wird zumindest eine Einparkanzeicheninformation 21 erfasst. Die Einparkanzeicheninformation 21 beschreibt ein Anzeichen für ein Einparken des Kraftfahrzeugs 1 in den unbelegten Parkbereich 18. Die zumindest eine Einparkanzeicheninformation 21 kann beispielsweise den Verlauf der Fahrtrajektorie 19, 19', 19", 19‴ beschreiben. Die Einparkanzeicheninformation 21 wird typischerweise mit der Sensoreinrichtung 3 des Kraftfahrzeugs 1 erfasst, beispielsweise indem diese Lenkeingaben durch den Fahrer 13 an der Lenkung 8 des Kraftfahrzeugs 1 erfasst und in Form beispielsweise der Fahrtrajektorie 19, 19', 19", 19‴ bereitgestellt.

In einem Verfahrensschritt S3 erfolgt ein Ermitteln eines Einparkabsichtswahrscheinlichkeitswerts 50. Der Einparkabsichtswahrscheinlichkeitswert 50 gibt eine Wahrscheinlichkeit einer Einparkabsicht des Fahrers 13 des Kraftfahrzeugs 1 in den unbelegten Parkbereich 18 an und wird unter Anwendung eines situationsabhängigen Gewichtungskriteriums 51 ermittelt. Das situationsabhängige Gewichtungskriterium 51 wird auf die Einparkanzeicheninformation 21 unter Berücksichtigung der Parkbereichsinformation 20 und/oder einer Einparkrichtungsinformation 49 bestimmt. Die Einparkrichtungsinformation 49 beschreibt eine Richtung des Einparkens des Kraftfahrzeugs 1 in den unbelegten Parkbereich 18. Um die Einparkrichtungsinformation 49 zu erhalten, kann die zumindest eine Einparkanzeicheninformation 21 und/oder die zumindest eine Parkbereichsinformation 20 ausgewertet werden.

Im Verfahrensschritt S3 erfolgt bevorzugt eine Fusion von mehreren Einparkanzeicheninformationen 21 unter Berücksichtigung einer situationsabhängigen Gewichtung, die im situationsabhängigen Gewichtungskriterium 51 hinterlegt ist. Es ist relevant, dass tatsächlich ein unbelegter Parkbereich 18 erkannt wurde, das heißt die Parkbereichsinformation 20 bereitgestellt wurde. Denn falls zwar die Einparkanzeicheninformation 21 erkannt wurde, jedoch keine Parkbereichsinformation 20 vorliegt, kann kein Einparkabsichtswahrscheinlichkeitswerts 50 bestimmt werden.

Falls tatsächlich eine Zielparklücke, also der unbelegte Parkbereich 18, erkannt wurde und somit die Parkbereichsinformation 20 vorliegt, kommt es in einem Verfahrensschritt S4 zu einem Überprüfen, ob der ermittelte Einparkabsichtswahrscheinlichkeitswert 50 groß genug ist, um tatsächlich auf eine Einparkabsicht schließen zu können. Hierfür wird überprüft, ob der ermittelte Einparkabsichtswahrscheinlichkeitswert 50 größer als ein Wahrscheinlichkeitsgrenzwert 52 ist. Falls dies der Fall ist, erfolgt in einem Schritt S5 ein automatisches Aktivieren oder ein Anbieten des Aktivierens des Fahrerassistenzsystems 6 zum Unterstützen des Einparkens des Kraftfahrzeugs 1 in den unbelegten Parkbereich 18. Falls die ermittelte Einparkabsichtswahrscheinlichkeit 50 kleiner oder gleich dem Wahrscheinlichkeitsgrenzwert 52 ist, kommt es nicht zum automatischen Aktivieren oder Anbieten des Aktivierens des Fahrerassistenzsystems 6, sondern beispielsweise zu einem Beenden des Verfahrens in einem Verfahrensschritt S6. Alternativ dazu kann es vorgesehen sein, dass das Verfahren erneut von vorne durchgeführt wird, also darauf gewartet wird, dass wieder eine Parkbereichsinformation 20 und eine Einparkanzeicheninformation 21 bereitgestellt wird, um einen neuen Einparkabsichtswahrscheinlichkeitswert 50 bestimmen zu können.

Falls mehrere unbelegte Parkbereiche 18 erfasst werden, wird für jeden der erfassten unbelegten Parkbereiche 18 der Einparkabsichtswahrscheinlichkeitswert 50 ermittelt. Falls mehrere der ermittelten Einparkabsichtswahrscheinlichkeitswerte 50 größer als der Wahrscheinlichkeitsgrenzwert 52 sind, wird nur für den unbelegten Parkbereich 18 mit dem höchsten ermittelten Einparkabsichtswahrscheinlichkeitsgrenzwert 50 das automatische Aktivieren oder Anbieten des Aktivierens des Fahrerassistenzsystems 6 in Schritt S5 durchgeführt.

Das situationsabhängige Gewichtungskriterium 51 berücksichtigt zumindest eine von folgenden Situationsinformationen: Eine Verkehrssituation in der Umgebung 14 des Kraftfahrzeugs 1, eine Straßenart einer Straße, auf der sich das Kraftfahrzeug 1 befindet und/oder eine Infrastrukturzugehörigkeit der Umgebung 14 des Kraftfahrzeugs 1, insbesondere eine Zugehörigkeit zu einem Parkplatz oder einem Parkhaus. Je nach Situation findet also eine unterschiedliche Gewichtung der einzelnen Einparkanzeicheninformationen 21 statt.

Der Verfahrensschritt S1 wird bevorzugt von der Umgebungserfassungseinrichtung 2 durchgeführt, der Verfahrensschritt S2 von der Sensoreinrichtung 3, die Verfahrensschritte S3 und S4 werden von der Auswerteeinrichtung 4 durchgeführt und der Verfahrensschritt S5 von der Steuereinrichtung 5, gegebenenfalls in Kombination mit der Anzeigeeinrichtung 7, die dazu ausgebildet ist, ein Angebot zum Aktivieren des Fahrerassistenzsystems 6 auf der Anzeigeeinrichtung 7 darzustellen. Der Verfahrensschritt S6 wird ebenfalls von der Auswerteeinrichtung 4 durchgeführt.

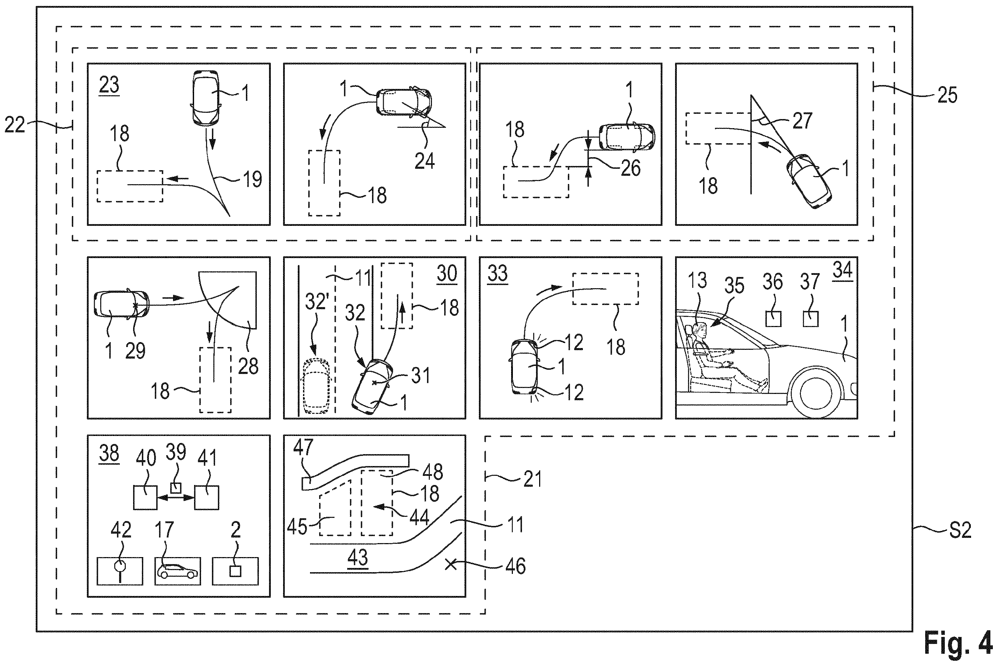

In Fig. 4 sind verschiedene Einparkanzeicheninformationen 21, die im Schritt S2 erfasst werden, skizziert. Besonders bevorzugt weist die Einparkanzeicheninformation 21 eine Lenkeingabeinformation 22 auf. Diese kann eine Lenkbewegung 23 des Kraftfahrzeugs 1 beschreiben, wobei es sich hierbei insbesondere um die Fahrtrajektorie 19, 19', 19", 19‴ handelt. Alternativ oder zusätzlich dazu, kann die Lenkeingabeinformation 22 einen Lenkeinschlagwinkel 24 der Lenkung 8 des Kraftfahrzeugs 1 beschreiben. Hierbei handelt es sich bevorzugt um den Lenkeinschlagwinkel 24, den die Lenkung 8 während eines Stillstands des Kraftfahrzeugs 1 einnimmt. Der Lenkeinschlagwinkel 24 ist zwischen parallel zur Fahrzeuglängsrichtung orientierten Rädern einer Vorderachse des Kraftfahrzeugs 1 und einer aktuellen Stellung der Räder der Vorderachse des Kraftfahrzeugs 1 angeordnet.

Alternativ oder zusätzlich dazu kann die Einparkanzeicheninformation 21 eine Relativanordnungsinformation 25 aufweisen. Diese beschreibt eine aktuelle relative Anordnung des Kraftfahrzeugs 1 zum unbelegten Parkbereich 18. Insbesondere kann hier ein seitlicher Abstand 26 zwischen dem Kraftfahrzeug 1 und dem unbelegten Parkbereich 18 berücksichtigt werden. Alternativ oder zusätzlich dazu kann ein Winkel 27 des Kraftfahrzeugs 1 relativ zum unbelegten Parkbereich 18 verstanden werden. Der Winkel 27 ist zwischen einer Mittelachse in Fahrzeuglängsrichtung des Kraftfahrzeugs 1 und beispielsweise einer Begrenzung des unbelegten Parkbereichs 18 zur Umgebung 14 des Parkbereichs 18 angeordnet.

Alternativ oder zusätzlich dazu kann die Einparkanzeicheninformation 21 beschreiben, ob das Kraftfahrzeug 1 zumindest mit einem Referenzpunkt 29 des Kraftfahrzeugs 1 in einen Umkehrbereich 28 bewegt wurde also zumindest temporär in diesem angeordnet ist. Der Referenzpunkt 29 ist zum Beispiel ein Mittelpunkt einer Hinterradachse des Kraftfahrzeugs 1. Der Umkehrbereich 28 wird zunächst mittels der Auswerteeinrichtung 4 bestimmt, wobei es sich hierbei um einen Bereich handelt, in dem das Kraftfahrzeug 1 beim Einparken in den unbelegten Parkbereich 18 mit einer Wahrscheinlichkeit, die größer als eine Mindestwahrscheinlichkeit ist, einen Fahrtrichtungswechsel durchführen wird, falls das Kraftfahrzeug 1 von einer aktuellen Position 31 und Ausrichtung 32 des Kraftfahrzeugs 1 aus, in den unbelegten Parkbereich 18 einparkt. Der Umkehrbereich 28 kann beispielsweise mittels einer Umkehrpunktanalyse, die auf die aktuelle Position 31 und Ausrichtung 32 des Kraftfahrzeugs 1 sowie die Parkbereichsinformation 20, die eine Parkbereichsanordnung und Parkbereichsposition des unbelegten Parkbereichs 18 aufweist, bestimmt werden. Hier ist der Umkehrbereich 28 für ein Rückwärtseinparken entlang der Fahrtrajektorie 19 in den quer zur Straße angeordneten Parkbereich 18 skizziert.

Alternativ oder zusätzlich dazu kann die Einparkanzeicheninformation 21 eine Abweichungsinformation 30 aufweisen. Hierfür wird die aktuelle Position 31 sowie Ausrichtung 32 des Kraftfahrzeugs 1 auf einer dem Kraftfahrzeug 1 bereitgestellten Landkarte 11 ermittelt. Die Abweichungsinformation 30 beschreibt ein Abweichen zwischen der ermittelten Ausrichtung 32 und einer für die ermittelte Position 31 typischen Ausrichtung 32'. Diese typischerweise erwartete Ausrichtung 32' ist hier anhand eines gestrichelt dargestelltes Kraftfahrzeugs 1 skizziert.

Vor allem bei den bisher beschriebenen Einparkanzeicheninformationen 21 ist es stets besonders relevant, die Einparkrichtungsinformation 49 zu berücksichtigen, da die jeweiligen Einparkanzeicheninformationen 21 stets im Zusammenhang mit der Information zu sehen sind, ob das Kraftfahrzeug 1 längs vorwärts, quer vorwärts, längs rückwärts oder quer rückwärts in den unbelegten Parkbereich 18 einparken wird. Je nachdem wie die Einparkrichtungsinformation 49 ist, können nämlich die einzelnen beschriebenen Einparkanzeicheninformationen 21 unterschiedlich stark auf die Einparkabsicht des Fahrers 13 des Kraftfahrzeugs 1 hindeuten. Beispielsweise ist eine Aussagekraft der Fahrtrajektorie 19, 19', 19", 19‴ abhängig von der Einparkrichtungsinformation 49, da wie in Fig. 2 gezeigt, für ein Vorwärts- oder ein Rückwärtseinparken unterschiedliche Fahrtrajektorien 19, 19', 19", 19‴ typisch und gegebenenfalls eindeutig oder weniger deutlich identifizierbar sind. Auch ist beispielsweise der seitliche Abstands 26 davon abhängig, ob längs oder quer, vorwärts oder rückwärts eingeparkt wird. In analoger Weise ergeben sich spezifische Anforderungen an den Lenkeinschlagwinkel 24, den Winkel 27 relativ zum unbelegten Parkbereich 18, den Umkehrbereich 28 sowie die Abweichungsinformation 30, je nachdem welche Richtung des Einparkens des Kraftfahrzeugs 1 vorgesehen ist und/oder wie der relative Parkbereich 18 zu der Straße beziehungsweise der aktuellen Fahrtrichtung des Kraftfahrzeugs 1 in der Umgebung 14 des unbelegten Parkbereichs 18 orientiert ist.

Als weitere Einparkanzeicheninformation 21 kann eine Blinkerzustandsinformation 33 angesehen werden. Diese gibt einen Zustand des Blinkers 12 des Kraftfahrzeugs 1 an, also ob dieser aktuell aktiviert oder deaktiviert ist. Die Einparkanzeicheninformation 21 kann alternativ oder zusätzlich eine Blickrichtungsinformation 34 aufweisen, die eine Blickrichtung 36 und/oder eine Blickdauer 37 eines Blicks 35 des Fahrers 13 des Kraftfahrzeugs 1 beschreibt.

Alternativ oder zusätzlich dazu kann die Einparkanzeicheninformation 21 eine Fahrgeschwindigkeitsinformation 38 aufweisen. Diese beschreibt eine Abweichung 39 einer aktuellen Geschwindigkeit 40 des Kraftfahrzeugs 1 von einer Soll-Geschwindigkeit 41 des Kraftfahrzeugs 1. Die Soll-Geschwindigkeit 41 kann beispielsweise mittels einer Verkehrszeichenerkennung 42 ermittelt, von zumindest einem der anderen Fahrzeuge 17 in der Umgebung 14 des Kraftfahrzeugs 1 an das Kraftfahrzeug 1 übermittelt werden und/oder mittels der Umgebungserfassungseinrichtung 2 des Kraftfahrzeugs 1 erfasst werden. Die Soll-Geschwindigkeit 41 ist hierbei typischerweise eine Durchschnittsgeschwindigkeit von anderen Fahrzeugen 17 in der Umgebung 14 des Kraftfahrzeugs 1 und/oder eine vorgegebene Maximalgeschwindigkeit auf der Straße, auf der das Kraftfahrzeug 1 aktuell fährt. Die Soll-Geschwindigkeit 41 passt sich hierbei einer aktuellen Verkehrssituation an, so dass beispielsweise bei einem Stau und/oder in einem stockenden Verkehr und/oder in der Nähe eines Hindernisses auf der Straße eine niedrigere Soll-Geschwindigkeit 41 angenommen wird, als bei einer freien Fahrt auf der Straße mit vergleichsweise weniger anderen Verkehrsteilnehmern.

Alternativ oder zusätzlich dazu kann die Einparkanzeicheninformation 21 eine Parklückenbewertungsinformation 43 aufweisen. Die Parklückenbewertungsinformation 43 wird unter Berücksichtigung der Parkbereichsinformation 20 ermittelt und kann eine von folgenden Informationen über den unbelegten Parkbereich 18 aufweisen: Eine Größe 44 des unbelegten Parkbereichs 18 im Vergleich zu einer Größe 44 einer zeitlich zuvor erfassten weiteren unbelegten Parkbereichsfläche 45, also einem alternativen unbelegten Parkbereich 18, der jedoch zeitlich betrachtet früher vom Kraftfahrzeug 1 erfasst wurde. In dem hier skizzierten Beispiel befinden sich zwei nebeneinander angeordnete unbelegte Parkbereiche 18, wobei die hier links skizzierte Parkbereichsfläche 45 kleiner als der rechts daneben angeordnete größere Parkbereich 18 ist. Dies liegt in diesem Beispiel daran, dass die beiden Parkbereiche 18 von einer Mauer 47 begrenzt werden, die hier nicht parallel zu der skizzierten Straße angeordnet ist. Die Parklückenbewertungsinformation 43 würde nun berücksichtigen, dass der hier rechts skizzierte Parkbereich 18 eine größere Größe 44 aufweist als die links davon angeordnete aber zeitlich zuvor erfasste Parkbereichsfläche 45.

Alternativ oder zusätzlich umfasst die Parklückenbewertungsinformation 43 eine räumliche Nähe zu einem Zielort 46, beispielsweise dem Zielort 46 des Navigationssystems 10. Alternativ oder zusätzlich wird eine Übersichtlichkeit des Parkbereichs 18 unter Berücksichtigung einer räumlichen Ausdehnung von erfassten Objekten, wie beispielsweise der Mauer 47, berücksichtigt. Zudem kann eine räumliche Nähe zu einem für das Kraftfahrzeug 1 reservierten Parkbereich 48 berücksichtigt werden. Letztlich kann zudem eine Beurteilung erfolgen, die unter Berücksichtigung der zuvor genannten einzelnen Informationen ermittelt wird und beispielsweise eine Art Rating von mehreren potentiellen Parkbereichen 18 durchführt.

Die einzelnen Einparkanzeicheninformationen 21 werden jeweils einzeln durch Anwenden des situationsabhängigen Gewichtungskriteriums 51 bewertet, sodass aus der Fusion all dieser mehreren Einparkanzeicheninformationen 21, von denen bevorzugt stets mehrere Einparkanzeicheninformationen 21 im Verfahrensschritt S2 erfasst werden, der Einparkabsichtswahrscheinlichkeitswert 50 ermittelt wird. Wenn eine ausreichende Anzahl an Einparkanzeicheninformationen 21 gemäß der gewählten situationsabhängigen Gewichtung auf eine Einparkabsicht des Fahrers 13 hindeutet, das heißt erst dann, wenn der Einparkabsichtswahrscheinlichkeitswert 50 größer als der Wahrscheinlichkeitsgrenzwert 52 ist, kann tatsächlich auf die Einparkabsicht des Fahrers 13 geschlossen werden. Letztendlich kann also das beschriebene Verfahren, verknüpft mit der Parklückenerkennung, die in Form der Parkbereichsinformation 20 vorliegt, jeder erkannter und geeigneter unbelegter Parkbereich 18 einen entsprechenden Einparkabsichtswahrscheinlichkeitswert 50 zugewiesen bekommen, der angibt, mit welcher Wahrscheinlichkeit der Fahrer 13 genau dort einparken möchte. Bei der ausreichend hohen Einparkabsichtswahrscheinlichkeit 50, das heißt wenn diese größer als der Wahrscheinlichkeitsgrenzwert 52 ist, wird der konkrete Einparkwunsch des Fahrers 13 erkannt, wobei hierfür die explizit ausgewählte Parklücke, das heißt der ausgewählte unbelegte Parkbereich 18, der in Form der Parkbereichsinformation 20 beschrieben ist, berücksichtigt wird. Daraufhin wird automatisiert und somit ohne Bedieneingabe des Fahrers 13 das Fahrerassistenzsystem 6 zum Unterstützen des Einparkens des Kraftfahrzeugs 1 in den unbelegten Parkbereich 18 aktiviert. Alternativ kann eine Auswahl angeboten werden, sodass der Fahrer 13 selbst das Fahrerassistenzsystem 6 manuell aktivieren kann, wenn er dies tatsächlich wünscht.

Die Erkennung des vom Fahrer 13 ausgewählten unbelegten Parkbereichs 18 ermöglicht es, dass das Fahrerassistenzsystem 6 eine optimale Trajektorienplanung zum Einparken in den unbelegten Parkbereich 18 bestimmen kann. Ausgangspunkt ist hierbei stets, dass das Kraftfahrzeug 1 an möglichen unbelegten Parkbereichen 18 vorbeifährt, danach oder davor oder gleichzeitig dazu zumindest eine der Einparkanzeicheninformationen 21 ausgewertet wird und dann die Ermittlung des Einparkabsichtswahrscheinlichkeitswerts 50 für jeden unbelegten Parkbereich 18 erfolgt. Wird hierbei mit ausreichender Wahrscheinlichkeit die Einparkabsicht erkannt, ist es jedoch sehr relevant, dass auch tatsächlich die Parkbereichsinformation 20 vorliegt, das heißt beispielsweise eine Zielparklücke als unbelegter Parkbereich 18 erkannt wurde. Nur wenn dies der Fall ist, erfolgt das automatische Aktivieren und/oder Anbieten des Aktivierens des Fahrerassistenzsystems 6 im Schritt S5.

Insgesamt zeigen die Beispiele ein Verfahren zur Ermittlung des Einparkswunsches des Fahrers 13 und zur Bestimmung der vom Fahrer 13 gewünschten Zielparklücke, das heißt des vom Fahrer 13 gewählten unbelegten Parkbereichs 18, auf dem er sein Kraftfahrzeug 1 einparken möchte.

### Bezugszeichenliste

- 1: Kraftfahrzeug
- 2: Umgebungserfassungseinrichtung
- 3: Sensoreinrichtung
- 4: Auswerteeinrichtung
- 5: Steuereinrichtung
- 6: Fahrerassistenzsystem
- 7: Anzeigeeinrichtung
- 8: Lenkung
- 9: Kommunikationsschnittstelle
- 10: Navigationssystem
- 11: Landkarte
- 12: Blinker
- 13: Fahrer
- 14: Umgebung
- 15: externe Einrichtung
- 16: Servereinrichtung
- 17: Fahrzeug
- 18: Parkbereich
- 19, 19', 19", 19‴: Fahrtrajektorie
- 20: Parkbereichsinformation
- 21: Einparkanzeicheninformation
- 22: Lenkeingabeinformation
- 23: Lenkbewegung
- 24: Lenkeinschlagwinkel
- 25: Relativanordnungsinformation
- 26: seitlicher Abstand
- 27: Winkel
- 28: Umkehrbereich
- 29: Referenzpunkt
- 30: Abweichungsinformation
- 31: Position
- 32, 32': Ausrichtung
- 33: Blinkerzustandsinformation
- 34: Blickrichtungsinformation
- 35: Blick
- 36: Blickrichtung
- 37: Blickdauer
- 38: Fahrgeschwindigkeitsinformation
- 39: Abweichung
- 40: aktuelle Geschwindigkeit
- 41: Soll-Geschwindigkeit
- 42: Verkehrszeichenerkennung
- 43: Parklückenbewertungsinformation
- 44: Größe
- 45: Parkbereichsfläche
- 46: Zielort
- 47: Mauer
- 48: reservierter Parkbereich
- 49: Einparkanzeicheninformation
- 50: Einparkabsichtswahrscheinlichkeitswert
- 51: situationsabhängiges Gewichtungskriterium
- 52: Wahrscheinlichkeitsgrenzwert
- S1 bis S6: Verfahrensschritte

## Patentansprüche

1. Verfahren zum Unterstützen eines Einparkens eines Kraftfahrzeugs (1), wobei das Verfahren folgende Schritte aufweist:
- Bereitstellen (S1) von zumindest einer Parkbereichsinformation (20), die einen unbelegten Parkbereich (18) in einer Umgebung (14) des Kraftfahrzeugs (1) beschreibt;
- Erfassen (S2) von zumindest einer Einparkanzeicheninformation (21), die ein Anzeichen für ein Einparken des Kraftfahrzeugs (1) in den unbelegten Parkbereich (18) beschreibt, wobei die zumindest eine Einparkanzeicheninformation (21) eine Lenkeingabeinformation (22) aufweist, die eine Lenkeingabe eines Fahrers (13) des Kraftfahrzeugs (1) beschreibt;
- Ermitteln (S3) eines Einparkabsichtswahrscheinlichkeitswerts (50), der eine Wahrscheinlichkeit einer Einparkabsicht des Fahrers (13) des Kraftfahrzeugs (1) in den unbelegten Parkbereich (18) beschreibt, unter Anwendung eines situationsabhängigen Gewichtungskriteriums (51) auf die zumindest eine Einparkanzeicheninformation (21) unter Berücksichtigung der zumindest einen erfassten Parkbereichsinformation (20); und
- falls der ermittelte Einparkabsichtswahrscheinlichkeitswert (50) größer als ein Wahrscheinlichkeitsgrenzwert (52) ist (S4), automatisches Aktivieren oder Anbieten des Aktivierens (S5) eines Fahrerassistenzsystems (6) zum Unterstützen des Einparkens des Kraftfahrzeugs (1) in den unbelegten Parkbereich (18);
**dadurch gekennzeichnet, dass**
(a) ein Umkehrbereich (28) bestimmt wird, in dem das Kraftfahrzeug (1) beim Einparken in den unbelegten Parkbereich (18) mit einer Wahrscheinlichkeit, die größer als eine Mindestwahrscheinlichkeit ist, einen Fahrtrichtungswechsel durchführen wird, falls das Kraftfahrzeug (1) von einer aktuellen Position (31) und Ausrichtung (32) des Kraftfahrzeugs (1) aus in den unbelegten Parkbereich (18) einparkt, und die zumindest eine Einparkanzeicheninformation (21) beschreibt, ob das Kraftfahrzeug (1) zumindest mit einem Referenzpunkt (29) des Kraftfahrzeugs (1) tatsächlich in den bestimmten Umkehrbereich (28) bewegt wird; und/oder
(b) eine Position (31) und eine Ausrichtung (32) des Kraftfahrzeugs (1) auf einer dem Kraftfahrzeug (1) bereitgestellten Landkarte (11) ermittelt wird und die zumindest eine Einparkanzeicheninformation (21) eine Abweichungsinformation (30) aufweist, die eine Abweichung zwischen der ermittelten Ausrichtung (32) und einer für die ermittelte Position (31) typischen Ausrichtung (32') beschreibt; und/oder
(c) die zumindest eine Einparkanzeicheninformation (21) eine Parklückenbewertungsinformation (43) aufweist, die unter Berücksichtigung der Parkbereichsinformation (20) ermittelt wird und zumindest eine von folgenden Informationen über den unbelegten Parkbereich (18) aufweist:
- eine Größe (44) im Vergleich zu einer zeitlich zuvor erfassten unbelegten Parkbereichsfläche (45);
- eine räumliche Nähe zu einem Zielort (46);
- eine Übersichtlichkeit unter Berücksichtigung von einer räumlichen Ausdehnung von zumindest einem erfassten Objekt (47) in der Umgebung (14) des unbelegten Parkbereichs (18);
- eine räumliche Nähe zu einem für das Kraftfahrzeug (1) reservierten Parkbereich (48);
- eine Beurteilung, die unter Berücksichtigung zumindest einer der genannten Informationen ermittelt wird.

2. Verfahren nach Anspruch 1, wobei eine Einparkrichtungsinformation (49), die eine Richtung des Einparkens des Kraftfahrzeugs (1) in den unbelegten Parkbereich (18) beschreibt, durch Auswerten der zumindest einen Einparkanzeicheninformation (21) und/oder der zumindest einen Parkbereichsinformation (20) ermittelt und beim Anwenden des situationsabhängigen Gewichtungskriteriums (51) berücksichtigt wird.

3. Verfahren nach einem der vorhergehenden Ansprüche, wobei die zumindest eine Parkbereichsinformation (20) mittels einer Umgebungserfassungseinrichtung (2) des Kraftfahrzeugs (1) ermittelt und/oder von einer externen Einrichtung (15) an das Kraftfahrzeug (1) übermittelt wird.

4. Verfahren nach einem der vorhergehenden Ansprüche, wobei die Lenkeingabeinformation (22) eine Lenkbewegung (23) des Kraftfahrzeugs (1) beschreibt, insbesondere eine Fahrtrajektorie (19, 19', 19", 19‴).

5. Verfahren nach einem der vorhergehenden Ansprüche, wobei die Lenkeingabeinformation (22) einen Lenkeinschlagwinkel (24) einer Lenkung (8) des Kraftfahrzeugs (1) beschreibt, insbesondere den Lenkeinschlagwinkel (24) den die Lenkung (8) während eines Stillstands des Kraftfahrzeugs (1) einnimmt.

6. Verfahren nach einem der vorhergehenden Ansprüche, wobei die Einparkanzeicheninformation (21) eine Relativanordnungsinformation (25) aufweist, die eine aktuelle relative Anordnung des Kraftfahrzeugs (1) zum unbelegten Parkbereich (18) beschreibt, insbesondere einen seitlichen Abstand (26) und/oder einen Winkel (27) des Kraftfahrzeugs (1) relativ zum unbelegten Parkbereich (18).

7. Verfahren nach einem der vorhergehenden Ansprüche, wobei die zumindest eine Einparkanzeicheninformation (21) eine Blinkerzustandsinformation (33) aufweist, die einen Zustand eines Blinkers (12) des Kraftfahrzeugs (1) beschreibt.

8. Verfahren nach einem der vorhergehenden Ansprüche, wobei die zumindest eine Einparkanzeicheninformation (21) eine Blickrichtungsinformation (34) aufweist, die eine Blickrichtung (36) und/oder Blickdauer (37) eines Blicks (35) des Fahrers (13) beschreibt.

9. Verfahren nach einem der vorhergehenden Ansprüche, wobei die zumindest eine Einparkanzeicheninformation (21) eine Fahrgeschwindigkeitsinformation (38) aufweist, die eine Abweichung (39) einer aktuellen Geschwindigkeit (40) des Kraftfahrzeugs (1) von einer Sollgeschwindigkeit (41) beschreibt, wobei die Sollgeschwindigkeit (41) insbesondere mittels einer Verkehrszeichenerkennung (42) ermittelt, von anderen Fahrzeugen (17) in der Umgebung (14) des Kraftfahrzeugs (1) an das Kraftfahrzeug (1) übermittelt und/oder mittels einer Umgebungserfassungseinrichtung (2) des Kraftfahrzeugs (1) erfasst wird.

10. Verfahren nach einem der vorhergehenden Ansprüche, wobei, falls mehrere unbelegte Parkbereiche (18) erfasst werden, für jeden der mehreren erfassten unbelegten Parkbereiche (18) der Einparkabsichtwahrscheinlichkeitswert (50) ermittelt wird und, falls mehrere der ermittelte Einparkabsichtwahrscheinlichkeitswerte (50) größer als der Wahrscheinlichkeitsgrenzwert (52) sind, nur für den unbelegten Parkbereich (18) mit dem höchsten ermittelten Einparkabsichtwahrscheinlichkeitswert (50) das automatische Aktivieren oder Anbieten des Aktivierens des Fahrerassistenzsystems (6) erfolgt.

11. Verfahren nach einem der vorhergehenden Ansprüche, wobei das situationsabhängige Gewichtungskriterium (51) zumindest eine von folgenden Situationsinformationen berücksichtigt:
- eine Verkehrssituation in der Umgebung (14) des Kraftfahrzeugs (19);
- eine Straßenart einer Straße, auf der sich das Kraftfahrzeug (1) befindet;
- eine Infrastrukturzugehörigkeit der Umgebung (14) des Kraftfahrzeugs (1), insbesondere eine Zugehörigkeit zu einem Parkplatz oder einem Parkhaus.

12. Kraftfahrzeug (1) mit einer Umgebungserfassungseinrichtung (2), einer Sensoreinrichtung (3), einer Auswerteeinrichtung (4) und einer Steuereinrichtung (5), wobei das Kraftfahrzeug (1) dazu ausgebildet ist, ein Verfahren nach einem der vorhergehenden Ansprüche durchzuführen.

## Claims

1. Method for supporting parking of a motor vehicle (1), the method comprising the following steps:
- providing (S1) at least one piece of parking region information (20) which describes an unoccupied parking region (18) in surroundings (14) of the motor vehicle (1);
- detecting (S2) at least one piece of parking indication information (21) which describes an indication of parking the motor vehicle (1) in the unoccupied parking region (18), the at least one piece of parking indication information (21) comprising a piece of steering input information (22) which describes a steering input of a driver (13) of the motor vehicle (1);
- ascertaining (S3) a parking intention probability value (50) which describes a probability of the driver (13) of the motor vehicle (1) intending to park in the unoccupied parking region (18), by applying a situation-dependent weighting criterion (51) to the at least one piece of parking indication information (21) taking into account the at least one detected piece of parking region information (20); and
- if the ascertained parking intention probability value (50) is greater than a probability limit (52) (S4), automatically activating or offering to activate (S5) a driver assistance system (6) to support the parking of the motor vehicle (1) in the unoccupied parking region (18);
**characterized in that**
(a) a turning region (28) is determined in which the motor vehicle (1), when parking in the unoccupied parking region (18), will perform a change of direction of travel with a probability which is greater than a minimum probability if the motor vehicle (1) parks in the unoccupied parking region (18) from a current position (31) and orientation (32) of the motor vehicle (1), and the at least one piece of parking indication information (21) describes whether the motor vehicle (1), with at least one reference point (29) of the motor vehicle (1), is actually moving into the determined turning region (28); and/or
(b) a position (31) and an orientation (32) of the motor vehicle (1) is ascertained on a map (11) provided to the motor vehicle (1) and the at least one piece of parking indication information (21) has a piece of deviation information (30) which describes a deviation between the ascertained orientation (32) and an orientation (32') which is typical for the ascertained position (31); and/or
(c) the at least one piece of parking indication information (21) has a piece of parking space evaluation information (43) which is ascertained taking into account the piece of parking region information (20) and comprises at least one of the following pieces of information about the unoccupied parking region (18):
- a size (44) compared to a previously detected unoccupied parking region surface area (45);
- a spatial proximity to a target location (46);
- a visibility taking into account a spatial extension of at least one detected object (47) in the surroundings (14) of the unoccupied parking region (18);
- a spatial proximity to a parking region (48) reserved for the motor vehicle (1);
- an assessment which is ascertained taking into account at least one of the mentioned pieces of information.

2. Method according to claim 1, a piece of parking direction information (49) which describes a direction of parking of the motor vehicle (1) in the unoccupied parking region (18) being ascertained by analyzing the at least one piece of parking indication information (21) and/or the at least one piece of parking region information (20) and being taken into account when applying the situation-dependent weighting criterion (51).

3. Method according to any of the preceding claims, the at least one piece of parking region information (20) being ascertained by means of a surroundings detection device (2) of the motor vehicle (1) and/or being transmitted to the motor vehicle (1) by an external device (15).

4. Method according to any of the preceding claims, the piece of steering input information (22) describing a steering movement (23) of the motor vehicle (1), in particular a travel trajectory (19, 19', 19", 19‴).

5. Method according to any of the preceding claims, the piece of steering input information (22) describing a steering angle (24) of a steering system (8) of the motor vehicle (1), in particular the steering angle (24) which the steering system (8) assumes when the motor vehicle (1) is at a standstill.

6. Method according to any of the preceding claims, the piece of parking indication information (21) comprising a piece of relative arrangement information (25) which describes a current relative arrangement of the motor vehicle (1) with respect to the unoccupied parking region (18), in particular a lateral distance (26) and/or an angle (27) of the motor vehicle (1) relative to the unoccupied parking region (18).

7. Method according to any of the preceding claims, the at least one piece of parking indication information (21) comprising a piece of turn signal state information (33) which describes a state of a turn signal (12) of the motor vehicle (1).

8. Method according to any of the preceding claims, the at least one piece of parking indication information (21) comprising a piece of line of gaze information (34) which describes a line of gaze (36) and/or duration of gaze (37) of a gaze (35) of the driver (13).

9. Method according to any of the preceding claims, the at least one piece of parking indication information (21) comprising a piece of travel speed information (38) which describes a deviation (39) of a current speed (40) of the motor vehicle (1) from a target speed (41), the target speed (41) being ascertained in particular by means of a road sign recognition (42), being transmitted to the motor vehicle (1) by other vehicles (17) in the surroundings (14) of the motor vehicle (1) and/or detected by means of a surroundings detection device (2) of the motor vehicle (1).

10. Method according to any of the preceding claims, the parking intention probability value (50) being ascertained for each of the plurality of detected unoccupied parking regions (18) if a plurality of unoccupied parking regions (18) are detected and, if a plurality of the ascertained parking intention probability values (50) are greater than the probability limit value (52), the automatic activation or the offer to activate the driver assistance system (6) takes place only for the unoccupied parking region (18) having the highest ascertained parking intention probability value (50).

11. Method according to any of the preceding claims, the situation-dependent weighting criterion (51) taking into account at least one of the following pieces of situation information:
- a traffic situation in the surroundings (14) of the motor vehicle (19);
- a road type of a road on which the motor vehicle (1) is located;
- an infrastructure association of the surroundings (14) of the motor vehicle (1), in particular an association with a parking lot or a parking garage.

12. Motor vehicle (1) comprising a surroundings detection device (2), a sensor device (3), an analysis device (4) and a control device (5), the motor vehicle (1) being designed to carry out a method according to any of the preceding claims.

## Revendications

1. Procédé permettant d'assister une entrée en stationnement d'un véhicule automobile (1), dans lequel le procédé présente les étapes suivantes :
- mise à disposition (S1) d'au moins une information de zone de stationnement (20) qui décrit une zone de stationnement inoccupée (18) dans un environnement (14) du véhicule automobile (1) ;
- acquisition (S2) d'au moins une information de signalisation d'entrée en stationnement (21) qui décrit une signalisation pour une entrée en stationnement du véhicule automobile (1) dans la zone de stationnement inoccupée (18), dans lequel l'au moins une information de signalisation d'entrée en stationnement (21) présente une information de couple de direction (22) qui décrit un couple de direction d'un conducteur (13) du véhicule automobile (1) ;
- détermination (S3) d'une valeur de probabilité d'intention d'entrée en stationnement (50) qui décrit une probabilité d'une intention d'entrée en stationnement du conducteur (13) du véhicule automobile (1) dans la zone de stationnement inoccupée (18), en appliquant un critère de pondération (51) dépendant de la situation à l'au moins une information de signalisation d'entrée en stationnement (21) en tenant compte de l'au moins une information de zone de stationnement (20) acquise ; et
- si la valeur de probabilité d'intention d'entrée en stationnement (50) déterminée est supérieure (S4) à une valeur limite de probabilité (52), activation automatique ou proposition d'activation (S5) d'un système d'assistance au conducteur (6) permettant d'assister l'entrée en stationnement du véhicule automobile (1) dans la zone de stationnement inoccupée (18) ;
**caractérisé en ce que**
(a) une zone de retournement (28) est établie, dans laquelle le véhicule automobile (1) réalisera un changement de direction de conduite lors de l'entrée en stationnement dans la zone de stationnement inoccupée (18) avec une probabilité qui est supérieure à une probabilité minimale, si le véhicule automobile (1) entre en stationnement dans la zone de stationnement inoccupée (18) à partir d'une position (31) et d'une orientation (32) actuelles du véhicule automobile (1), et l'au moins une information de signalisation d'entrée en stationnement (21) décrit si le véhicule automobile (1) est effectivement déplacé dans la zone de retournement (28) établie au moins avec un point de référence (29) du véhicule automobile (1) ; et/ou
(b) une position (31) et une orientation (32) du véhicule automobile (1) sont déterminées sur une carte géographique (11) mise à disposition du véhicule automobile (1) et l'au moins une information de signalisation d'entrée en stationnement (21) présente une information d'écart (30) qui décrit un écart entre l'orientation (32) déterminée et une orientation (32') typique pour la position (31) déterminée ; et/ou
(c) l'au moins une information de signalisation d'entrée en stationnement (21) présente une information d'évaluation d'espace de stationnement (43) qui est déterminée en tenant compte de l'information de zone de stationnement (20) et présente au moins une des informations suivantes concernant la zone de stationnement inoccupée (18) :
- une taille (44) par comparaison à une surface de zone de stationnement inoccupée (45) acquise précédemment dans le temps ;
- une proximité géographique avec une destination (46) ;
- une visibilité en tenant compte d'une extension spatiale d'au moins un objet (47) acquis dans l'environnement (14) de la zone de stationnement inoccupée (18) ;
- une proximité géographique avec une zone de stationnement (48) réservée au véhicule automobile (1) ;
- une appréciation qui est déterminée en tenant compte d'au moins l'une des informations précitées.

2. Procédé selon la revendication 1, dans lequel une information de direction d'entrée en stationnement (49), qui décrit une direction d'entrée en stationnement du véhicule automobile (1) dans la zone de stationnement inoccupée (18), est déterminée par évaluation de l'au moins une information de signalisation d'entrée en stationnement (21) et/ou de l'au moins une information de zone de stationnement (20) et est prise en compte lors de l'application du critère de pondération (51) dépendant de la situation.

3. Procédé selon l'une des revendications précédentes, dans lequel l'au moins une information de zone de stationnement (20) est déterminée par le biais d'un dispositif d'acquisition d'environnement (2) du véhicule automobile (1) et/ou est transmise au véhicule automobile (1) par un dispositif externe (15).

4. Procédé selon l'une des revendications précédentes, dans lequel l'information de couple de direction (22) décrit un mouvement de direction (23) du véhicule automobile (1), en particulier une trajectoire de conduite (19, 19', 19", 19‴).

5. Procédé selon l'une des revendications précédentes, dans lequel l'information de couple de direction (22) décrit un angle de braquage (24) d'une direction (8) du véhicule automobile (1), en particulier l'angle de braquage (24) que prend la direction (8) pendant un arrêt du véhicule automobile (1).

6. Procédé selon l'une des revendications précédentes, dans lequel l'information de signalisation d'entrée en stationnement (21) présente une information d'agencement relatif (25) qui décrit un agencement relatif actuel du véhicule automobile (1) par rapport à la zone de stationnement inoccupée (18), en particulier une distance latérale (26) et/ou un angle (27) du véhicule automobile (1) par rapport à la zone de stationnement inoccupée (18).

7. Procédé selon l'une des revendications précédentes, dans lequel l'au moins une information de signalisation d'entrée en stationnement (21) présente une information d'état de clignotant (33) qui décrit un état d'un clignotant (12) du véhicule automobile (1).

8. Procédé selon l'une des revendications précédentes, dans lequel l'au moins une information de signalisation d'entrée en stationnement (21) présente une information de direction de regard (34) qui décrit une direction de regard (36) et/ou une durée de regard (37) d'un regard (35) du conducteur (13).

9. Procédé selon l'une des revendications précédentes, dans lequel l'au moins une information de signalisation d'entrée en stationnement (21) présente une information de vitesse de conduite (38) qui décrit un écart (39) entre une vitesse actuelle (40) du véhicule automobile (1) et une vitesse de consigne (41), dans lequel la vitesse de consigne (41) est en particulier déterminée par le biais d'une reconnaissance de signalisation routière (42), transmise au véhicule automobile (1) par d'autres véhicules (17) dans l'environnement (14) du véhicule automobile (1) et/ou acquise par le biais d'un dispositif d'acquisition d'environnement (2) du véhicule automobile (1).

10. Procédé selon l'une des revendications précédentes, dans lequel, si plusieurs zones de stationnement inoccupées (18) sont acquises, la valeur de probabilité d'intention d'entrée en stationnement (50) est déterminée pour chacune des plusieurs zones de stationnement inoccupées (18) acquises et, si plusieurs des valeurs de probabilité d'intention d'entrée en stationnement (50) déterminées sont supérieures à la valeur limite de probabilité (52), l'activation automatique ou la proposition d'activation du système d'assistance au conducteur (6) n'a lieu que pour la zone de stationnement inoccupée (18) avec la valeur de probabilité d'intention d'entrée en stationnement (50) déterminée la plus élevée.

11. Procédé selon l'une des revendications précédentes, dans lequel le critère de pondération (51) dépendant de la situation prend en compte au moins l'une des informations de situation suivantes :
- une situation de trafic dans l'environnement (14) du véhicule automobile (19) ;
- un type de route d'une route sur laquelle se trouve le véhicule automobile (1) ;
- une appartenance infrastructurelle de l'environnement (14) du véhicule automobile (1), en particulier une appartenance à une place de stationnement ou à un parc de stationnement.

12. Véhicule automobile (1) comportant un dispositif d'acquisition d'environnement (2), un dispositif capteur (3), un dispositif d'évaluation (4) et un dispositif de commande (5), dans lequel le véhicule automobile (1) est conçu pour mettre en œuvre un procédé selon l'une des revendications précédentes.
